# EUROPEAN PATENT SPECIFICATION

(11) **EP 4 182 493 B1**
(45) Date of publication and mention of the grant of the patent: **29.05.2024**
(21) Application number: 20768377.2
(22) Date of filing: 17.07.2020
(51) Int. Cl.: C25B 1/23, C25B 3/03, C25B 3/07, C25B 3/26, C25B 9/19, C25B 9/23, C25B 9/77, C25B 11/032, C25B 15/023, C25B 15/027, C25B 15/029, C25B 15/031

(54) **PROCESS AND SYSTEM TO ENHANCE AND SUSTAIN ELECTROLYSER PERFORMANCE OF CARBON-DIOXIDE ELECTROLYSERS**
VERFAHREN UND SYSTEM ZUR VERBESSERUNG UND AUFRECHTERHALTUNG DER LEISTUNG EINES ELEKTROLYSEURS VON KOHLENDIOXID-ELEKTROLYSEUREN
PROCÉDÉ ET SYSTÈME POUR AMÉLIORER ET MAINTENIR LES PERFORMANCES D'ÉLECTROLYSEUR D'ÉLECTROLYSEURS DE DIOXYDE DE CARBONE

(43) Date of publication of application: 24.05.2023
(73) Proprietor: Szegedi Tudományegyetem, 6720 Szeged (HU); eChemicles Zrt., 6726 Szeged (HU)
(72) Inventor: DARVAS, Ferenc, 1016 Budapest (HU); ENDRÖDI, Balázs, 6723 Szeged (HU); JANÁKY, Csaba, 6726 Szeged (HU); JONES, Richard, 1071 Budapest (HU); KECSENOVITY, Egon, 24410 (RS); SAMU, Angelika, 6640 Csongrád (HU)
(74) Representative: Danubia Patent & Law Office LLC
(86) International application number: PCT/HU2020/050033
(87) International publication number: WO 2022/013583

(56) References cited:
- WO-A1-2020/143970
- US-A1- 2018 274 109
- US-A1- 2019 256 988
- XIANG HANG ET AL: "Enhanced selectivity of carbonaceous products from electrochemical reduction of CO2 in aqueous media", JOURNAL OF CO2 UTILIZATION, vol. 30, 22 February 2019 (2019-02-22), pages 214-221, XP055778819, ISSN: 2212-9820, DOI: 10.1016/j.jcou.2019.02.007
- RESASCO JOAQUIN ET AL: "Promoter Effects of Alkali Metal Cations on the Electrochemical Reduction of Carbon Dioxide", JOURNAL OF THE AMERICAN CHEMICAL SOCIETY, vol. 139, no. 32, 3 August 2017 (2017-08-03), pages 11277-11287, XP055778337, US ISSN: 0002-7863, DOI: 10.1021/jacs.7b06765 cited in the application

## Description

### Field of the invention

The present invention relates to the field of generating high value products via electrolysis of gaseous carbon dioxide. In particular, the invention relates to a process and system to enhance and sustain electrolyser performance of carbon-dioxide electrolysers during continuous operation of said electrolysers for an extended period of time with no loss of conversion rate and efficiency. Said carbon-dioxide electrolyser can be a carbon-dioxide electrolyser constructed as either a single electrolyser cell or multiple electrolyser cells, i.e., comprising an electrolyser cell-stack. An electrolyser cell-stack, here and from now on, is comprised of multiple electrolyser cells, wherein the individual cells are connected in series in terms of the electrical connections of the cells and connected in series/parallel in terms of the flow management of the electrolyser, i.e., the liquid flows and the gaseous flows directed through the electrolyser.

### Background art

Carbon dioxide (CO₂) is a greenhouse gas; hence, using renewable energy to convert it to transportation fuels and commodity chemicals is a value-added approach to the simultaneous generation of products and environmental remediation of carbon emissions. The large amounts of chemicals produced worldwide that can be potentially derived from the electrochemical reduction (and hydrogenation) of CO₂ highlight further the importance of this strategy. Electrosynthesis of chemicals using renewable energy (e.g. solar or wind energy) contributes to a green and more sustainable chemical industry. Due to the variety of possible CO₂ derived products, polymer-electrolyte membrane (PEM) based electrolysers are of particular attraction.

A typical configuration of a PEM based CO₂ electrolyser consists of a separator (an ionexchange membrane or a diaphragm) which is either in direct contact with the catalyst layers (zero gap cells), or is separated from those by liquid layers (anolyte and catholyte on the anode and cathode sides, respectively). The cathode electrocatalyst is immobilized on a porous gas diffusion layer (GDL), forming thereby the cathode gas-diffusion electrode (GDE).

Zero-gap electrolysers function without liquid catholyte, which allows operation at lower cell voltages (which in turn results in higher energy efficiency). Extended continuous operation of a zero-gap CO₂ electrolyser with alkaline anolyte leads, however, to a precipitate formation on the cathode. This is also true for non-zero gap devices (i.e., where liquid catholyte flows), but to a smaller extent. This crystallite formation is attributed to the formation of metal-carbonate or metal-bicarbonate salts (e.g., K₂CO₃ or KHCO₃) which takes place because of the crossover of cations of the anolyte from the anodic side to the cathodic side (in zero-gap cells) or because of the presence of a catholyte (in non-zero gap cells).

The precipitate formation in the cathode GDE decreases the electrolyser performance by blocking the way of the reactant gas to the catalyst layer. This also leads to pressure buildup in the cell, which distorts the elements within the cell, i.e. can damage cell integrity and results in loss of electrolyser performance of the cell. To avoid this, thus, regeneration is needed. Here, and from now on, the term "regeneration of the electrolyser" will refer to a process to restore the electrolyser performance. When continuous operation is also of issue, this requires mechanical and/or chemical mobilization or dissolution of the precipitate without disassembling the electrolyser.

An attempt for this is to continuously dose water or water vapor in the CO₂ gas stream. Although this solution represents the current state-of-the-art, it may cause the flooding of the cell, leading to decreased selectivity for CO₂-reduction product formation (and increase H₂ evolution). Moreover, GDEs in these electrochemical cells are designed to be hydrophobic, to allow the reactant CO₂ to reach the catalyst surface in the gas phase, instead it being dissolved in ample amount of water, causing mass transport limitations in the conversion process. When rinsing the cathode compartment of the electrolyser with water, therefore only precipitate formed on the back of the GDE (e.g., in the gas-flow pattern) can be removed, but not that formed in the pores of the GDL. To press water into the pore structure of the GDE, an excessive force (i.e., pressure) is required, which in turn damages the structure of the GDL and (micro-)cracks are formed. Such microcracks allow water to flow through the GDL, therefore the whole GDE gets flooded after some time, which hampers long-term operation of these devices. The regenerating solution must therefore be tailored to the hydrophilic/hydrophobic nature of the used GDE and the operation conditions of the electrolyser.

Anion exchange membrane (AEM) based operation, in principle, is independent of the fact whether an alkaline solution (most typically KOH, NaOH, or CsOH) or water is fed at the anode (given that the anodic electrocatalyst functions in both media). Despite of this, the electrolyser performance (in terms of product formation rate and selectivity) of zero-gap CO₂ electrolysers with deionized water as anolyte has been found unsatisfactorily low for industrial application. A major difference between the operation of the electrolyser with an alkaline anolyte and pure deionized water is that metal cations cross the membrane in the first case from the anode to the cathode, leading to the presence of these ions on the surface of the cathode catalyst layer.

In the field of continuous CO₂ conversion by means of electrolysis in electrolyser cells or stacks, a great deal of technical solutions is known.

In particular, a comprehensive summary of the current state-of-the-art of the development of continuous-flow electrolysers for CO₂ reduction is given by B. Endrődi et al. (see Prog. Energy Combust. Sci. 2017, 62, pp.133-154. https://doi.org/10.1016/j.pecs.2017.05.005). The paper describes some possible embodiments of the electrolysers, the most important criteria and descriptors for the efficient operation thereof, and some of possible electrolyser failure mechanisms. Moreover, the review spans the basic design concepts of electrochemical cells (either microfluidic or membrane-based), the employed materials (e.g. catalysts, support, etc.), as well as the operational conditions (e.g. type of electrolyte, role of pressure, temperature, etc.).

US Published Patent Appl. No. 2018/0274109 A1 discloses an apparatus with a full operation environment for CO₂ electrolysers, including fluid control and electrochemical instrumentation framework. It does include a refresh supply unit, which can infuse water into the cathode or anodic side of the cell to refresh it. According to the application, said refresh supply unit is to be operated when the cell operation is unsatisfactory in terms of cell voltage, cell current and/or when the Faradaic efficiency of the desired product does not satisfy request criteria.

US Published Patent Appl. No. 2019/0127865 A1 describes a possible embodiment of an electrolyser for continuous CO₂ reduction. The most important electrolyser elements and operating conditions are described. In particular, the application discloses an electrochemical device and method involving bipolar membrane electrolysis to transform an input product into an output product. Some embodiments include a GDE as a cathode, a bipolar membrane configured to facilitate auto-dissociation, and an anode that can be configured as a liquid-electrolyte style electrode or a GDE. In some embodiments the electrochemical device can be configured as a CO₂ electrolyser that is designed to utilize input product including gaseous carbon dioxide and water to generate output products that can include gaseous carbon monoxide or other reduction products of carbon dioxide and gaseous oxygen or the oxidation products of a depolarizer such as hydrogen, methane, or methanol.

B. Endrődi et al. (for further details, see ACS Energy Lett. 2019, 4 (7), pp. 1770-1777; https://doi.org/10.1021/acsenergylett.9b01142) teaches about the possibility of stacking multiple electrolyser cells in a single electrochemical stack to increase the product formation rate and/or conversion efficiency. Rinsing the cathodes of the electrolyser cells with water, or with high temperature water vapor is presented as a strategy to maintain the performance of the electrolyser cell-stack.

Furthermore, previous studies in H-type electrochemical cells and microfluidic CO₂ electrolysers proved the promoting effect of alkali-cations in the electrochemical reduction of CO₂ (for further details, see a paper by J. Resasco et al. in J. Am. Chem. Soc. 2017, 139 (32), pp. 11277-11287). Such an effect has not yet been observed or reported with zero-gap CO₂ electrolysers, most probably due to the lack of liquid catholyte in this case.

However, none of the cited prior art proposes a solution for the above-referred problems which arise when the CO₂ electrolyser is operated over an extended period of time continuously, i.e., without periodical stopping for maintenance, i.e. for cleansing or replacing spoilt/clogged GDEs.

Similarly, neither have been demonstrated before such CO₂ electrolysers which are capable of performing a stable (i.e., a duration of at least about 150 h) and high current density (i.e., over 400 mA cm⁻²) operation with deionized water as anolyte.

Hence, there would be a need for a technique by means of which the maintenance of continuously operated CO₂ electrolysers can be performed without their stopping, i.e., with no need to disassemble said electrolysers. Putting another way, to sustain the electrochemical or electrolyser performance of CO₂ gas-fed electrolysers, there is a need for a novel operational process and system which also allow for the regeneration of CO₂ electrolysers in operation.

Hence, there would be also a need for a technique by means of which the electrochemical or electrolyser performance of present CO₂ gas-fed electrolysers making use of either de-ionized water or an alkaline solution as anolyte, specifically at least in terms of their stability and current density, is enhanced.

In light of this, the main object of the present invention is to eliminate or at least to alleviate the drawbacks of the state-of-the-art CO₂ gas fed electrolysers in terms of the loss in their electrolyser performance over time.

Another object of the present invention is to provide a way of operating CO₂ gas-fed electrolysers making use of either deionized water or an alkaline solution as anolyte with no interruption (e.g., disassembling the electrolyser cell(s) for maintenance) over an extended duration of time.

Additional objects, as well as aspects, features and advantages, of the present invention will be set forth in the following description.

### Summary of the invention

The invention relates to the process of claim 1 and the system of claim 16. Specific embodiments are the subject-matter of dependent claims.

We found in our studies that chemical mobilization of the precipitate that forms in and clogs the pores of the cathode GDE over time in CO₂ gas-fed electrolysers can simply be enhanced by performing regeneration of the cathode during operation of CO₂ electrolysers from time to time, preferably periodically, by means of introducing a regeneration agent into the cathode compartment which is capable of wetting the cathode GDE. In particular, the regeneration agent is a liquid solvent of proper wetting properties in respect of the cathode GDE(s) to be used within the electrolyser cell or cell-stack to be regenerated. Preferably, the regeneration agent is provided in the form of a mixture of at least two liquid solvents which, when mixed together, form the solvent mixture of proper wetting properties in respect of the cathode GDE(s) made use of within the electrolyser cell or cell-stack to be regenerated. As a consequence of the wetting capability, the regeneration agent can enter into the pores of GDE(s), dissolve and expel the precipitate from the pores without destructing the pore structure of the GDE(s).

To obtain the regeneration agent with appropriate wetting properties for a certain GDE, a great number of solvents, or mixtures formed thereof, can be used. In particular, any of the solvents selected from the group of acetone, acetonitrile, chloroform, diethyl ether, diethylene glycol, dimethyl-formamide, ethyl acetate, ethylene glycol, glycerol, tetrahydrofuran, xylene, water, deionized water, methanol, ethanol, 1-propanol, 2-propanol, 1-butanol, 2-butanol, pentanol, pentane, hexane, heptane, cyclohexane can be equally used as the regeneration agent either alone or in combination to form a solvent mixture compatible with a GDE to be regenerated. Selection of the regeneration agent to be used (i.e., its components and the ratio of components in case of a solvent mixture) depends on the wettability of the GDE concerned. As wettability of a GDE is known from manufacturer's specification or can be measured before assembling an electrolyser, it is a routine task for a skilled artisan to determine the kind of regeneration agent and, in particular, its components/composition to be applied for the subsequent regeneration during continuous operation of the electrolyser.

As specific examples, water cannot penetrate into carbon-based, polytetrafluoro-ethylene (PTFE) containing GDEs (such as e.g. Sigracet 39BC, Freudenberg H23C6, etc.) due to their hydrophobicity, and therefore the use of less polar regeneration agents (e.g. water/isopropanol mixture) is necessary, while GDEs formed of porous titanium frits can be regenerated by water, as water wets the GDE properly. It was found, that the solvent mixture of 2-propanol (isopropanol) and deionized water (from now on DI water) with a volume ratio of at least about 1:3 is an especially preferred solvent mixture; the greater is the isopropanol proportion in said solvent mixture, the more appropriate/compatible the solvent mixture is for carbon-based GDEs in terms of its wetting properties.

Furthermore, we have also found that for a certain GDE and regeneration agent, a complete regeneration of the electrolyser requires a definite amount of regeneration agent either in the form of a single solvent or a solvent mixture. That is, raising the amount of regeneration agent used to regenerate the electrolyser to above this amount, no further enhance in e.g. the conversion efficiency is measured. In particular, depending on the GDE and the regeneration agent selected for regeneration, the maximum amount of the regeneration agent ranges from about 0.01 to 1000 times, more preferably from about 0.1 to 100 times, and most preferably from about 1 to 50 times the empty volume of the cathode compartment of the electrolyser cell or cell-stack containing said GDE(s). Since this volume can be determined e.g. at least experimentally, it is a routine task for a skilled artisan to determine the amount (volume) of the regeneration agent to be used in one regeneration cycle of the cathode GDE(s) of a CO₂ gas-fed electrolyser.

We have found in our studies that to achieve high reaction rates, in zero-gap CO₂ gas-fed electrolysers, the cation permeation through the separation membrane during continuous operation with alkaline electrolyte is the key.

We have surprisingly found that by introducing small volumes of especially alkali metal solutions (e.g. KOH, NaOH, CsOH, and similar compounds) into the cathode compartment of the electrolyser cell or cell-stack while continuously operating the electrolyser with pure deionized water as anolyte, an increase in both CO₂ reduction rate and selectivity appear, i.e., the electrolyser performance gets enhanced. The extent of increase is in correlation with the wettability of the cathode(s), or rather the cathode GDE(s), with the alkali metal solution infused into the cathode compartment of the electrolyser cell or cell-stack. Here, and from now on, the term "activation of the electrolyser" will refer to a process of infusing an electrolyte (or promoter) containing solvent or solvent mixture into the cathode compartment. Thus, we found that by performing periodic activation of the cathode GDE, carried out preferably simultaneously with the regeneration of the electrolyser, the electrolyser performance can be increased from time to time, i.e., the electrolyser performance can be sustained for an extended period of time during the operation of the electrolyser. Said activation can also be performed either before or after the regeneration of the electrolyser.

The liquid phase of the promoter is obtained by dissolving said promoter in a liquid solvent, preferably in a solvent mixture used for the regeneration.

As promoter, any compounds selected from the group of NaCl, LiF, Li₃PO₄, Cs₂CO₃, Na₂CO₃, Li₂CO₃, K₂CO₃, Rb₂CO₃, NaNO₃, K₂SO₄, KHCO₃, NaHCO₃, LiHCO₃, CsHCO₃, RbHCO₃, RbOH, FrOH, CsOH, KOH, NaOH, as well as any mixture thereof, can be used dissolved in a liquid solvent, preferably in a solvent mixture used for the regeneration. The compounds of KOH, NaOH, CsOH are especially preferred.

Because of the stoichiometry of the electrochemical reactions taking place in electrolyser cells or cell-stacks, and due to the chemical nature of AEMs, the pH is always alkaline in the cathode compartment. We have surprisingly found that besides the above-referred alkaline promoters, neutral and even acidic compounds can be used to perform the activation. This observation confirms that the chemical nature of a promoter is more important than the pH of the solution and without bounding ourselves to theory, the observation may also explain the applicability of the mentioned gaseous promoters for the activation of GDEs. Furthermore, we have also found that for a certain GDE and promoter, complete activation of the electrolyser requires a definite concentration of the promoter. That is, raising the concentration of the promoter used for the activation of the cathode GDE to above this concentration, no further enhance in e.g. the conversion efficiency is measured. Depending on the GDE and the promoter selected for the activation, the maximum concentration of the promoter ranges from about 0.001 to 5 mol.dm⁻³, more preferably from about 0.01 to 3 mol.dm⁻³, and most preferably from 0.1 to 1 mol.dm⁻³.

Furthermore, we have surprisingly found that the adsorption of cations (or the promoters) present in the alkali metal solution infused in the electrolyser cell, i.e., electrosorption on the catalyst of the cathode GDE helps proper functioning, as well as maintaining a proper functioning of the cathode during the continuous electrolytic conversion of CO₂. Since a CO₂ gas-fed electrolyser is electrochemically polarized when it operates, in such cases the electrosorption increases. Nevertheless, the adsorption of promoters also takes place (to a minor extent) when the CO₂ electrolyser does not operate. Hence, the activation can be performed during maintenance period(s), i.e., when the electrolyser is anyway not in operation.

These findings enable the elaboration of a process and to design a system to operate a CO₂ gas-fed electrolyser comprised of either a zero-gap or a non-zero gap elecrolyser cell or cell-stack with deionized water as anolyte with periodic infusions of an activating solution that, beyond any doubt, reduces the operation complexity and the costs of the process of continuous electrolytic conversion of gaseous CO₂, thereby speeding up its industrial implementation.

In particular, the above goals are achieved by a process to enhance electrolyser performance of a continuously operated CO₂ gas-fed electrolyser according to claim 1. Further preferred variants of the process to enhance electrolyser performance are set forth in claims 2 to 9. The above objects are further achieved by a process to sustain electrolyser performance of a continuously operated CO₂ gas-fed electrolyser according to claim 10. Preferred variants of the process to sustain electrolyser performance are set forth in claims 11 to 15. Moreover, the above objects are furthermore achieved by a system to enhance and sustain electrolyser performance of a continuously operated CO₂ gas-fed electrolyser cell in accordance with claim 16. Preferred further embodiments of the system according to the invention are defined by claims 17 to 27.

It should be here noted that said activation process can be accomplished from time to time by a human operator in given time intervals and according to needs based on the measurement data acquired through multiple sensors to continuously monitor and evaluate the electrolyser performance in terms of pressure, temperature, current/voltage values, product selectivity, flow rate(s), humidity, product composition, etc. - just to mention only the most important operation parameters. Optionally, said time intervals may also be pre-set intervals, if optimal operation is not of a key feature.

However, as is preferred, the activation process is performed in an automated manner. To this end, the system responsible for operating the CO₂ electrolyser is equipped with a processing and control unit, equipped with or implemented as e.g. on artificial intelligence subunit, being capable of making a decision on the necessity of activation in light of the data received from the multiple sensors continuously monitoring and evaluating the electrolyser performance holistically. Thus, when reaching certain criteria in terms of pressure, temperature, current/voltage values, product selectivity, flow rate, product composition (or any combination thereof), the activation process is initiated and performed automatically. Similarly, regeneration of the electrolyser cell can also take place under the supervision of said processing and control unit.

As it will be apparent from the following description and the examples discussed in detail, the activation process according to the invention allows the operation of CO₂ gas-fed electrolysers with deionized water feed at the anode (i.e., as anolyte) for an extended period of time with no need for maintenance and thus interruption, simplifies the overall technology, while making it even more environmentally sustainable.

### Brief description of the drawings

In what follows, the invention is described in detail with reference to the accompanying drawings, wherein
- Figure 1A illustrates schematically the design of a zero-gap electrolyser cell to convert gaseous CO₂ to other products;
- Figure 1B illustrates schematically the design of a non-zero gap electrolyser cell to convert gaseous CO₂ to other products;
- Figure 2 shows a possible embodiment of the system to sustain electrolyser performance of a CO₂ electrolyser;
- Figure 3 shows a possible further embodiment of the system to sustain electrolyser performance of a CO₂ electrolyser in a fully automated manner;
- Figures 4A, 4B and 4C present the current decrease, a photograph of a clogged gas-diffusion electrode, and a micro-CT image of said gas-diffusion electrode used in a CO₂ electrolyser, respectively, operated continuously with an alkaline anolyte without cathode regeneration/activation;
- Figure 5 shows an example of wetting a carbon-based gas diffusion layer with different water/isopropanol solvent mixtures;
- Figure 6 shows the partial current density for CO and H₂ formation as a function of time during continuous operation of a CO₂ electrolyser for 8 hours with periodic regeneration;
- Figures 7A and 7B illustrate the total current densities over time during continuous operation of a CO₂ electrolyser with performing activation of the cathode GDE with 1 M KOH solution in pure deionized water and with a solvent mixture of isopropanol/water suitable for wetting the cathode GDE, respectively;
- Figures 8A and 8B are chronoamperometric curves with the cathode of a DI water anolyte fed CO₂ electrolyser activated with 10 cm³ of different alkaline solutions (c = 0.5 M) in a solvent mixture of isopropanol/water during continuous electrolysis;
- Figures 9A and 9B are chronoamperometric curves with the cathode of a DI water anolyte fed CO₂ electrolyser activated with 10 cm³ of different potassium salt solutions (c(K⁺) = 0.5 M) in a solvent mixture of isopropanol/water during continuous electrolysis;
- Figure 10 shows the partial current density for CO and H₂ formation over time during continuous operation of a DI water anolyte fed CO₂ electrolyser for 224 hours with periodic cathode activation with 5 cm³ 1 M CsOH solution in water/isopropanol after each 12 hours of electrolysis;
- Figure 11 shows the total and partial current density for CO formation over time during continuous operation of a DI water anolyte fed CO₂ electrolyser with cathode activation for various anion exchange membranes, in particular A: Class T Sustainion X37-50, B: PiperION TP-85 32 µm, and C: Fumasep FAB-PK-130;
- Figure 12 shows the measured partial current densities for H₂ and CO formation during constant voltage electrolysis with a DI water anolyte fed CO₂ electrolyser cell with cathode activation for various amounts (volumes) of the solvent mixture containing a promoter, here KOH; and
- Figure 13 the measured partial current densities for H₂ and CO formation during constant voltage electrolysis with a DI water anolyte fed CO₂ electrolyser cell with cathode activation for various concentration of the solvent mixture containing a promoter, here KOH.

### Description of possible embodiments

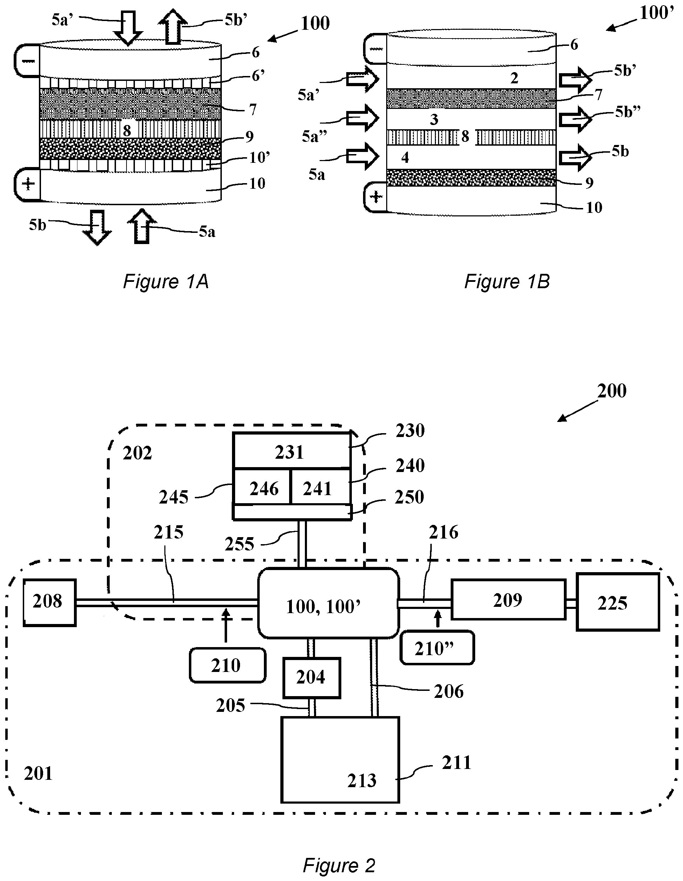

Figure 1A illustrates schematically a possible embodiment of a zero-gap electrolyser cell 100 to convert gaseous CO₂ to other products. Said electrolyser cell 100 comprises (here, from bottom to top) at least an anode current collector 10 with fluid inlet(s) 5a and fluid outlet(s) 5b on one side thereof and a flow-pattern 10' formed on the other side, an anode electrode 9 with a catalyst layer (not shown) on one side, a membrane 8, in direct contact with said catalyst layer, a cathode catalyst layer (not shown) in direct contact with the membrane 8 on one side, and the cathode electrode 7 on the other side, and a cathode current collector 6, on which a gas-flow pattern 6' is formed on one side thereof (in direct contact with the cathode electrode 7), while gas inlet(s) 5a' and outlet(s) 5b' are formed on the other side. As is clear for a skilled artisan, each of the anode electrode 9 and the cathode electrode 7 can be provided in the form of a gas-diffusion electrode (with a respective catalyst layer). Said electrolyser cell 100 may also be constructed as an electrolyser cell-stack, consisting of multiple electrolyser layers (cells). In this case, multiple electrolyser layers are stacked on each other, repeating the anode, anode catalyst, membrane, cathode catalyst and cathode elements. Between the adjacent layers, preferably bipolar plates are used, which on one side act as anode, while serve as cathode on the other side. Such bipolar plates are known in literature.

Figure 1B illustrates schematically a possible embodiment of a non-zero gap electrolyser cell 100' to convert gaseous CO₂ to other products. Said electrolyser 100' comprises (here, from bottom to top) an anode current collector 10, an anode electrode 9 with a catalyst layer, an anolyte flow channel 4 with an inlet 5a and an outlet 5b, a membrane 8, a catholyte flow channel 3 with an inlet 5a" and an outlet 5b", a cathode catalyst layer (not illustrated) facing the membrane 8, a cathode electrode 7 carrying said cathode catalyst layer, a gas channel 2 for gaseous CO₂ with an inlet 5a' and an outlet 5b', and a cathode current collector 6. Optionally, a single electrolyte solution may be used to separate the anode and cathode catalyst layers, replacing the anolyte flow channel 4, the membrane 8 and the catholyte flow channel 3. Each channel has at least one inlet and at least one outlet. As is clear for a skilled artisan, each of the anode electrode 9 and the cathode electrode 7 can be provided in the form of a gas-diffusion electrode (with a respective catalyst layer). Said electrolyser cell 100' may also be constructed as an electrolyser cell-stack, consisting of multiple electrolyser cells. In this case, multiple electrolyser cells are stacked on each other, repeating the anode, anode catalyst, anolyte, membrane, catholyte, cathode catalyst, cathode and gas channel and cathode elements.

The anode current collector 10, the cathode current collector 6, the anode electrode 9, the cathode electrode 7, the catalysts and the flow channels 2, 3, 4 and the flow patterns 6', 10' applied in the electrolyser cells 100, 100', as well as their functions and possible design are equally known in literature.

Furthermore, the membrane 8 is an anion exchange membrane, available under the trade names of e.g. Fumasep, Selemion, PiperION and Sustainion, just to mention a couple of examples only, which allows, in operation, the migration of anions (e.g., OH⁻, HCO₃⁻ and CO₃²⁻ ions; charges) between the cathodic and anodic sides of the electrolyser cell 100, 100' through its bulk, while water (H₂O) diffusing through said cells 100, 100' from the anodic to the cathodic side takes part in the electrolytic reduction of CO₂ at the cathodic side. As in this case no electrons are transported through the membrane 8, said membrane 8 actually acts as an ionic conductor between the cathodic and anodic sides of the cells 100, 100'.

In what follows, the operation of a system to enhance and sustain electrolyser performance of electrolyser cells during continuous electrolytic conversion of gaseous CO₂ to a product stream according to the invention, as well as some preferred embodimenst thereof are explained in detail. Here, zero-gap electrolyser cells and non-zero gap electrolyser cells are discussed together, although there are some differences between the operations of the two types of cells, as is apparent to a skilled artisan, e.g. the application of liquid catholyte flow through the cell in the case of non-zero gap electrolyser cells. When appropriate, the differences will also be discussed in brief.

Figure 2 illustrates a possible embodiment 200 of the system which can be used with both the CO₂ gas-fed zero-gap electrolyser cell 100 and the non-zero gap electrolyser cell 100' to convert gaseous CO₂ by electrolysis into one or more products for further applications, in a continuous manner and with an alkaline anolyte having an alkaline concentration of 0 to 3 M (including DI water, too) as the anolyte for an extended period of time without being stopped for e.g. maintenance, and at high current densities. To this end, said system 200 comprises a control subsystem 201 for the traditional operation of the cell 100, 100' and a regeneration/activation subsystem 202 to perform regeneration and/or activation of the cathode of the cell 100, 100' from time to time, according to needs. The control subsystem 201 and the regeneration/activation subsystem 202 are in operative couplings with one another.

As part of the control subsystem 201, a CO₂ source 208 provides the CO₂ feedstock for the conversion which takes place in the cell 100, 100'. Said CO₂ source 208 connects to an inlet (e.g. inlet 5a' in Figure 1A or inlet 5a' in Figure 1B) of the cathodic side of the cell 100, 100' through a piping 215 made of suitable material, e.g., stainless steel. Said CO₂ source 208 may be equipped with a controlled dispensing valve (not illustrated) to ensure precise metering and dispensing of the CO₂ feedstock to form a cathode-side circulation assembly. Optionally, a humidifier (not shown in Figure 2) can be inserted into the piping 215 to add/mix a given amount of water vapour to the CO₂ feedstock. Gaseous products produced from CO₂ within the cell 100, 100' via electrolysis leave the cell 100, 100', as a mixture which may also contain unconsumed CO₂, through appropriate outlets (e.g. outlet 5b' in Figure 1A or outlet 5b' in Figure 1B) of the cathodic side of the cell 100, 100' into a piping 216 made of suitable material, e.g., stainless steel. Said piping 216 transports the products from the cell 100, 100' to various analyser units, e.g. a (gas) flow rate measuring unit 209 and/or a (gas) composition measuring unit 225. The flow rate measuring unit 209 measures the flow rate of the (gaseous) mixture of products leaving the electrolyser cell 100, 100'. As is apparent to a skilled artisan, any kind of (gaseous) flow rate meter can be applied here. The composition measuring unit 225 measures and determines the composition of the (gaseous) mixture of products leaving the electrolyser cell 100, 100'. As is also apparent to a skilled artisan, any kind of composition measuring device can be applied.

A first set 210 of sensors is arranged along piping 215 upstream of the electrolyser cell (100, 100') to measure various parameters of the CO₂ feedstock before entry into the electrolyser cell 100, 100. Said first set 210 of sensors comprises at least one pressure gauge, at least one temperature sensor and, optionally, if e.g. the CO₂ feedstock is humidified, i.e. also contains water vapor, at least one moisture sensor.

A second set 210" of sensors is arranged along piping 216 downstream of the electrolyser cell (100, 100') to measure various parameters of the product(s) leaving the electrolyser cell 100, 100'. Said second set 210" of sensors comprises at least one pressure gauge, at least one temperature gauge, at least one moisture sensor and at least one pH sensor. Said second set 210" of sensors is arranged preferentially between the outlet (e.g. outlet 5b' in Figure 1A or outlets 5b' and 5b" in Figure 1B) of the cell 100, 100' and an inlet of the applied analyser units.

As part of the control subsystem 201, a liquid tank 211 containing an anolyte 213 is in fluid communication with an inlet (e.g. inlet 5a in Figure 1A or inlet 5a in Figure 1B) of the anodic side of the cell 100, 100' through a piping 205 made of suitable material, e.g., stainless steel to form an anode-side circulation assembly. To form a closed continuous flow-path on the anodic side of the cell 100, 100' between the anodic side and the liquid tank 211, an outlet (e.g. inlet 5b in Figure 1A or inlet 5b in Figure 1B) of the anodic side of the electrolyser cell 100, 100' is also in fluid communication with said liquid tank 211 through a piping 206 made of suitable material, e.g., stainless steel. Through the closed flow-path, the anolyte 213 is circulated by means of a pump 204 between the anodic side and the liquid tank 211 through an appropriate system of fluidic channels formed in the anode itself to refresh the anolyte 213 (if needed) which gets spoilt in electrochemical reaction(s) at the anodic side in the cell 100, 100'. Said pump 204 is preferably inserted into the piping 205.

In case of using the non-zero gap CO₂ electrolyser cell 100', a further set of electrolyte container, electrolyte solution, pump and piping is to be applied (not shown), preferably as part of the cathode-side circulation assembly, to circulate a catholyte in the cell 100', similarly to the anolyte container 211, the anolyte 213, the pump 204 and the piping 206 in the system 200. Practical implementation of such a set of further means is considered to be a routine task for a skilled artisan and/or can be found in literature.

Preferably, the anolyte 213 is pure DI water, however, it can be any kinds of alkaline anolyte suitable for being used in CO₂ electrolysers according to literature. In particular, the anolyte is preferably an alkaline liquid with an alkaline concentration of 0 to 3 M. Furthermore, as is known by the skilled artisan, the type of anolyte 213 used depends on the type of anion-exchange membrane and the catalysts applied in the electrolyser cell 100, 100' itself.

As part of the control subsystem 201, a processing and control unit (not shown in Figure 2) is also provided. The processing and control unit is connected (e.g. electrically) with any sensor elements in said first set 210 of sensors and in said second set 210" of sensors, as well as any analyser units, i.e., the flow rate measuring unit 209 and the composition measuring unit 225 to receive (e.g. electric) signals representative of the measured values of various physical and chemical parameters measured in the system 200 in order to control the operation of the electrolyser cell 100, 100' coupled to said system 200 either manually or in an automated manner (to be discussed later on).

As is also apparent to a skilled artisan, the system 200 also comprises an appropriate electric power supply (not illustrated) for energizing the electrolyser cell 100, 100'. To this end, to polarize the electrolyser cell 100, 100', a negative pole of the power supply is electrically connected with the cathodic side of said cell 100, 100', while a positive pole of the power supply is electrically connected with the anodic side of the cell 100, 100'. The power supply can be either the grid itself or any local source of electricity, i.e. a solar, wind, nuclear one. A battery, either a disposable or a secondary one, can be equally used as power supply. If required, said power supply also energizes the processing and control unit, as well as said pump 204.

Furthermore, as part of the regeneration/activation subsystem 202, a promoter tank 230, at least a first solvent tank 240 and a second solvent tank 245 are provided. Said promoter tank 230 contains a promoter 231.

Said first solvent tank 240 contains a first liquid solvent 241, said second solvent tank 245 contains a second liquid solvent 246 which preferably differs from said first solvent 241. Further promoter tanks, each containing a possible further promoter substance, preferentially differing from any other promoter substances, can also be provided. Further solvent tanks, each containing a possible further solvent, being preferentially different from any other solvents, can be also provided. Optionally, if merely one solvent is used for the regeneration/activation instead of a solvent mixture, the first and second solvent tanks 240, 245, as well as said further solvent tanks, can be replaced with a single solvent tank. In what follows, however, such an embodiment of the system 200 is discussed in detail which uses at least two different solvents for this purpose.

All of said tanks, i.e., the promoter tank 230, the first solvent tank 240, the second solvent tank 245, as well as any other promoter tanks and solvent tanks, if present, are in fluid communication with a mixing tank 250, through appropriate valves known by the skilled artisan. The mixing tank 250 is capable of receiving and mixing controlled amounts of said solvents 241, 246, as well as, optionally, at least one promoter 231 to form a solvent mixture which, optionally, also comprises a promoter substance. Said mixing tank 250 is in fluid communication with an inlet (e.g. inlet 5a' in Figure 1A or inlet 5a' in Figure 1B) of the cathodic side of the cell 100, 100' through a piping 255 made of suitable material, e.g., stainless steel. Preferably, a controlled dispensing valve (not illustrated in Figure 2) is inserted into the piping 255 for controlling the amount of the fluid flow, i.e. the solvent mixture with promoter substance fed or infused into said inlet of the electrolyser cell 100, 100'. All the valves are in operative coupling with the processing and control unit in order they be under full control of the latter.

The solvents 241, 246 contained in any of the first, second and further solvent tanks 240, 245 are selected from the group comprised of acetone, acetonitrile, chloroform, diethyl ether, diethylene glycol, dimethyl-formamide, ethyl acetate, ethylene glycol, glycerol, tetrahydrofuran, xylene, water, DI water, methanol, ethanol, 1-propanol, 2-propanol, 1-butanol, 2-butanol, pentanol, pentane, hexane, heptane, cyclohexane, and, at higher temperatures, vapors thereof, as well as any similar compounds. Furthermore, gaseous solvents, i.e. alkaline or acidic vapors of e.g. HCl, HBr, SO₂, NH₃, etc. may be equally used with some trivial modifications in the system 200.

Liquid phase (i.e., dissolved) promoter(s) 231 contained in the promoter tank(s) is/are selected from the group comprised of NaCl, LiF, Li₃PO₄, Cs₂CO₃, Na₂CO₃, Li₂CO₃, K₂CO₃, Rb₂CO₃, NaNO₃, K₂SO₄, KHCO₃, NaHCO₃, LiHCO₃, CsHCO₃, RbHCO₃, RbOH, FrOH, CsOH, KOH, NaOH, as well as any mixture thereof. As is also apparent to a skilled artisan, the promoter 231 can be provided as a solid substance as well. To obtain said liquid phase promoter, in such a case, at first the solid promoter has to be dissolved in a suitable solvent.

In operation, carbon dioxide supplied by the CO₂ source 208 of the system 200 is fed to the cathodic side of the CO₂ gas-fed electrolyser cell 100, 100'. In the presented CO₂ electrolyser system 200, products form in the electrolysis reactions taking place in said cell 100, 100'. Depending on the catalysts used within the cell 100, 100' and the applied CO₂ electrolysis reaction conditions, various products are obtained; as non-exhausting examples (i) syngas (CO/H₂ mixture with controlled composition), (ii) methane, (iii) ethylene, (iv) methanol, and (v) ethanol are mentioned here. The products forming in the cathodic part leave the cell 100, 100' and then are introduced into the product analyser units, that is, into the flow rate measuring device 209 and then the composition determining device 225 to determine the product flow rate and the product composition. Based on the measured data, the material balance of the electrolytic process undergoing within the cell 100, 100' can be determined and then made use of for controlling/regulating the conversion process. The anolyte 213 is directly and continuously fed into the anodic side of the cell 100, 100' with the pump 204. Said anolyte 213 flows through the anodic side of the cell 100, 100' and collects gaseous oxygen forming in the electrolysis reaction along its path. When the stream of anolyte 213 leaves the cell 100, 100', and before being recirculated into said cell 100, its oxygen content gets preferably released. Notably, other value-added anode processes (other than water oxidation, e.g. chlorine formation or alcohol oxidation) can be coupled to CO₂ conversion, as is clear for a skilled artisan; the architecture of said system 200/cell 100, 100' is not confined to water oxidation at all. Furthermore, during operation of the system 200, various physical parameters (such as pressure, temperature, humidity, etc.) of the CO₂ feedstock and the products are measured, or monitored by means of the first and second sets 210, 210" of sensors through the processing and control unit which, as a response to the measured data, operates said valves in order the electrolyser cell 100, 100" work smoothly and as desired. The operation parameters are known to a skilled artisan, while the implementation of said control/regulation is considered to be a routine work.

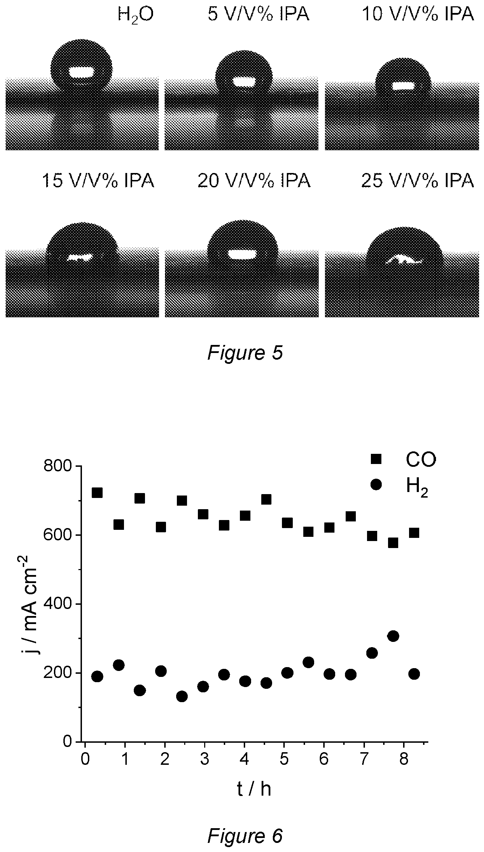

Here, as the anolyte 213, an alkaline anolyte with an alkaline concentration of 0 to 3 M is used (including the case of using pure DI water, too). In case of using an alkaline anolyte 213, to achieve an extended period of functioning (in this regard, see e.g. Example 3 and Figure 6) of the CO₂ gas-fed electrolyser cell 100, 100' used with the system 200, in harmony with the inventive concept, the cathodic side of the cell 100, 100' is regenerated by flushing the cathode compartment located adjacent to the cathode of the cell 100, 100' from time to time with a regeneration agent, i.e., an appropriate solvent or a solvent mixture of at least two different solvents 241, 246 prepared in the mixing tank 250 to avoid clogging as a consequence of precipitate formation. Said regeneration is performed, preferably periodically, either manually or, on the basis of the values of the parameters measured by the sets 210, 210" of sensors, in an automated manner. Said regeneration is performed simultaneously with supplying CO₂ to the cell's 100, 100' inlet (e.g. inlet 5a' in Figure 1A or inlet 5a' in Figure 1B) by means of said automated valve from the mixing tank 250 under full control of the processing and control unit. Thus, there is no need to stop or interrupt the electrolyser cell 100, 100' for its regeneration.

Furthermore, to enhance the electrolyser performance (in this regard, see e.g. Examples 4 to 10) and/or to further extend the period of functioning (in this regard, see e.g. Example 7) of the CO₂ gas-fed electrolyser cell 100, 100' used with the system 200, in harmony with the inventive concept, the cathodic side of the cell 100, 100' is activated by injecting an appropriate electrolyte, i.e. at least one promoter 231 into the cathode compartment located adjacent to the cathode of the cell 100, 100' from time to time from the promoter tank 230. Said activation is performed, preferably periodically, either manually or, on the basis of the values of the parameters measured by the sets 210, 210" of sensors, in an automated manner. Preferentially, the activation is performed simultaneously with the regeneration, that is, the at least one promoter 231 is dispensed into the mixing tank 250 together with said at least two solvents 241, 246, mixed together, and then the thus obtained solvent mixture containing the promoter(s) is injected into the cathode compartment from the mixing tank 250 through the cell's 100, 100' inlet by means of the automated valve under control of the processing and control unit. Thus, there is no need to stop or interrupt the electrolyser cell 100, 100' for its activation either. As is apparent to a skilled artisan, a gaseous promoter can be used for the activation in a similar series of steps, naturally with some trivial modifications.

The activation can also be performed separately from the regeneration. In particular, in case of using pure DI water as anolyte 213, the regeneration cycle can be simply omitted. In such a case, under control of the processing and control unit, only at least one promoter 231 is injected into the cathode compartment by the automated valve. Should there be a need, one of the solvent tanks, e.g. a third solvent tank (not illustrated in Figure 2), can be used to contain a suitable further solvent for the promoter 231 to adjust its concentration.

Actually, depending on the electrolyser cell 100, 100' used in the system 200, in particular the cathodic side GDE, activation of the cell 100, 100' requires a certain concentration of the promoter 231. That is, raising the concentration of the promoter 231 used to activate the cathode GDE to above this concentration, no further enhance in the electrolyser performance of the cell 100, 100' is obtained. Depending on the GDE and the promoter 231, the maximum concentration of the promoter 231 ranges from about 0.001 to 5 mol.dm⁻³, more preferably from about 0.01 to 3 mol.dm⁻³, and most preferably from 0.1 to 1 mol.dm⁻³, this can be easily obtained by the application of the solvent in said third solvent tank.

To activate the electrolyser cell 100, 100' in the system 200, usage of KOH, NaOH, CsOH, as promoter, is especially preferred.

As discussed above, the regeneration and/or activation of the electrolyser cell 100, 100' is carried out when the cell 100, 100' is operating, that is, when it is polarized. However, as is also apparent to a skilled artisan, said regeneration and/or activation can be performed by means of the system 200 according to the present invention in the switched-off state of the cell 100, 100' as well.

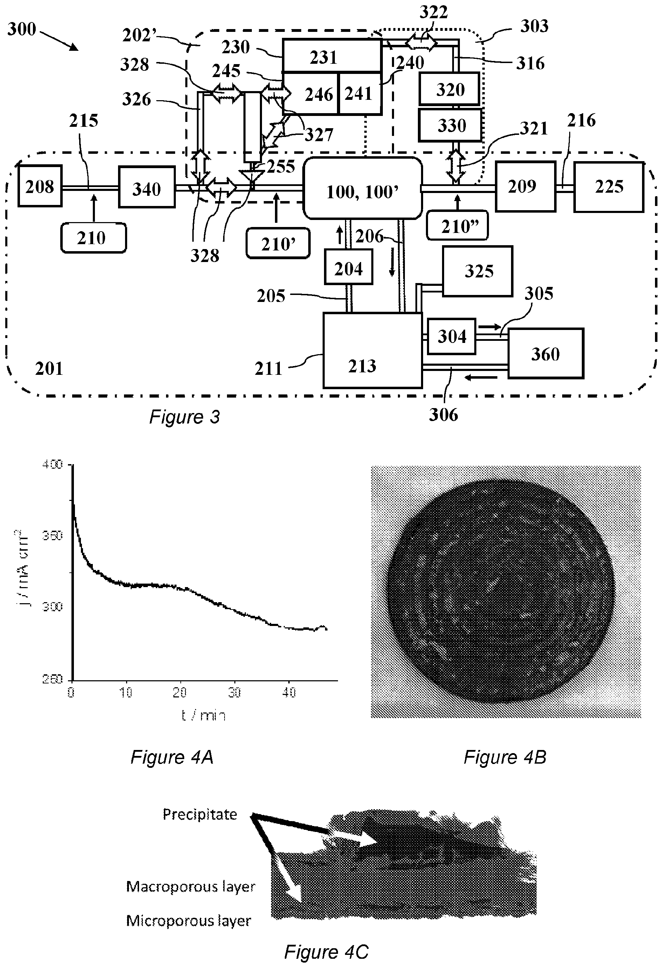

Figure 3 illustrates a possible further embodiment 300 of the system which can be used with the CO₂ gas-fed zero-gap electrolyser cell 100 or non-zero gap electrolyser cell 100' to convert gaseous CO₂ by electrolysis into one or more products for further applications, in a continuous manner and with an anolyte with an alkaline concentration of 0 to 3 M as the anolyte for an extended period of time without being stopped (for e.g. maintenance), and at high current densities. In Figure 3, certain components of the system 300 correspond to components of the system 200 shown in Figure 2, and hence are represented by the same reference numbers. Nevertheless, system 300 comprises some further units that allow fully automated operation of the electrolyser cell 100, 100' with regeneration and/or activation from time to time as required in light of the operational parameters continuously monitored in the system 300.

In particular, in a possible embodiment of the system 300, a tempered humidifier 340 is inserted into the piping 215 between the CO₂ source 208 and the electrolyser cell 100, 100' to control and adjust the water vapor content of the CO₂ feedstock and thereby to provide a humidified CO₂ feedstock for the electrolysis. Automated monitoring of the moisture content in the gaseous CO₂ is assisted by a third set 210' of sensors which also includes a moisture sensor arranged between the humidifier 340 and the electrolyser cell 100, 100'. The third set 210' of sensors is arranged along the piping 215 downstream of the humidifier 340 and upstream of the electrolyser cell (100, 100'). Each sensor element in said third set 210' of sensors is connected electrically with the processing and control unit to provide further measurement data about the system 300 in operation. For the purposes of the present invention, as is apparent to a skilled artisan, any kinds of humidifiers are applicable. As specific examples, membrane humidifiers from Cellkraft AB (Sweden), PermaPure (USA) or Fumatech GmbH (Germany), or similar humidifiers can be used.

In a yet possible further embodiment of the system 300, the regeneration/activation subsystem 202' is in fluid communication with an inlet (e.g. inlet 5a' in Figure 1A or inlet 5a' in Figure 1B) of the cathodic side of the electrolyser cell 100, 100' through an injection loop 326 built into the piping 255. Here, automated valves 327 are used to fill the injection loop 326 with the activating/regenerating compounds from the respective tanks 230, 240, 245, and thus there is no need for the mixing tank. The activating/regenerating compounds can then be injected from the injection loop 326 into the CO₂ stream in the piping 215 by controlled opening/closing of further automated valves 328. The valves 327, 328 are operated by the processing and control unit (part also of the control subsystem 201; not shown in Figure 3). Any of the temperature, composition and pH of the injected mixture are continuously monitored and controlled by respective sensor elements also provided in the third set 210' of sensors.

In a yet possible further embodiment of the system 300, a promoter recirculating subsystem 303 is also provided to reclaim the promoter passed through the electrolyser cell 100, 100' after performing the activation thereof. The promoter recirculating subsystem 303 is comprised of a piping 316 connecting the promoter tank 230 and a section of the piping 216 located between the outlet (e.g. outlet 5b' in Figure 1A or outlets 5b' and 5b" in Figure 1B) of the electrolyser cell 100, 100' and an inlet of the product analyser units (here, e.g. that of the flow rate measuring unit 209) through appropriate automated valves which are electrically connected with said processing and control unit. The valve to provide a selective flow connection between the piping 316 and said section of the piping 216 is preferably a three-path control valve 321. The valve to provide a flow connection between the piping 316 and the promoter tank 230 is preferably a bidirectional valve 322. Between the valves 322 and 321, a purifier unit 320 to purify the separated promoter, and a liquid/gas separator unit 330 to separate gaseous and liquid phases (containing the promoter) exiting from the cell 100, 100' are inserted into the piping 316.

The promoter recirculating subsystem 303 starts operating simultaneously with the regeneration/activation subsystem 202', which injects the promoter into the electrolyser cell 100, 100', which after passing said cell 100, 100' is separated from the product stream by means of the promoter recirculating subsystem 303. The purified promoter is then directed back in the promoter fluid tank 230 of the activation/regeneration subsystem 202'. The operation of this subsystem 303 is triggered and continuously monitored by the process and control unit of the control subsystem 201 part of the system 300.

In a yet possible further embodiment of the system 300, an anolyte refresher unit 360 to refresh and recirculate the spoilt anolyte 213 into the liquid tank 211 is also provided. Said anolyte refresher unit 360 is in fluid communication with the liquid tank 211 through pipings 305 and 306 made of suitable material, e.g., stainless steel. A pump 304 is inserted into one of the pipings 305, 306 to effect circulation of the anolyte 213 between the liquid tank 211 and said anolyte refresher unit 360. Preferably, the anolyte refresher unit 360 operates periodically, if the composition of the anolyte 213 measured by a composition measuring unit 325 under the supervision of the processing and control unit of the control subsystem 201 part of the system 300 makes it necessary. The application of the anolyte refresher unit 360 reduces the operation cost of the electrolysis process. Suitable anolyte refresher units 360 are known to the skilled artisan and commercially available. The anolyte refresher unit 360 may be a pH and concentration control instrument, such as Metrohm Titrando or Mettler Toledo (Switzerland) automatic titrators, which monitors the composition of the anolyte 213 and doses given chemicals to the anolyte 213 to restore its original composition. Said anolyte refresher unit 360 may also contain a liquid/gas and a liquid/solid separator inserted into the pipings 305, 306 in order to further improve the quality of the fresh anolyte fed into the electrolyser cell 100, 100'.

Preferably, the processing and control unit of the control subsystem 201 is equipped with or implemented as an artificial intelligence (AI) subunit. Here, any AI systems (based e.g. on a neural network, or one or more cooperative neural networks, etc.) that can be learned with or capable of self-learning from the operation patterns of the system 200, 300 under supervision, adapted properly to the electrolyser cell 100, 100' associated therewith, are suitable from the point of view of the invention. The AI subunit is responsible for the operation of the system 200, 300 as a whole, as well as the electrolyser cell 100,100'. This subunit operates the main hardware framework of the system 200, 300 (i.e., automated valves for the gas- and liquid management, electrolyser cell or cell-stack, power supply, various sensors, analyser units, such as e.g. (gas) flow rate meters, (gas) composition measuring units, etc.) and a PC controlled (semi)automatic software which monitors, collects and evaluates all the data from the various subunits. Based on this, to maintain maximum process efficiency, the system 200, 300 automatically optimizes the operation conditions (such as e.g. temperature, gas flow rate, electrolyser voltage/current, pressure etc.) through descriptors constructed from the subunits' data. When any of the descriptors reaches/exceeds pre-defined (or, optionally, set by the AI subunit itself as part of the learning process) (e.g. lower) threshold values, the processing and control unit of the control subsystem 201 triggers the operation of the regeneration/activation subsystem and the promoter recirculating subsystem. As an example, a pressure increase within the electrolyser cell 100, 100' indicates the blocking of its gas channels, and initiates a regeneration/activation operation. Similarly, a regeneration/activation operation is initiated when the composition of the cathodic product stream, continuously measured and analysed by the composition measuring unit 225, is unsatisfactory in terms of useful product to unwanted by-product ratio (i.e., too low CO/H₂ ratio). Furthermore, when e.g. the total current density decreases during constant voltage operation of the electrolyser cell 100, 100' (see for example Figure 4A in Example 1) faster than a certain threshold rate (e.g. 100 mA.cm⁻².h⁻¹) for over a pre-set time period, e.g. of 10 minutes, or alternatively upon a cell/cell-stack voltage increase of a certain threshold value, a regeneration operation can also be initiated. As part of an optimized operation, when all of said descriptors reach or exceed respective further (e.g. upper) threshold values, which overall represent a desired operation of the electrolyser cell 100, 100', the regeneration/activation operation is stopped by the system 200, 300.

In light of the operation of system 200, as well as the modifications effected in the structure of system 300 relative to that of system 200, the operation of system 300, in particular the way of regeneration/activation performed thereby is apparent to a skilled artisan, and hence is not detailed here.

In what follows, some further aspects of the regeneration/activation process according to the invention is discussed in more detail through Examples 1 to 10 based on experiments.

### Example 1: Operating the electrolyser without cathode regeneration/activation

In this comparative example, the performance fading of the electrolyser cell during continuous operation with alkaline anolyte is demonstrated. The decreasing current (hence product formation rate) is associated with precipitate formation, and the consequent improper gas management in the electrolyser.

Figure 4A shows the continuous current decrease during continuous operation at a constant cell voltage (ΔU = 3.0 V) with alkaline 1 M potassium hydroxide (KOH) anolyte.

Here, the cathode was formed by immobilizing 3 mg cm⁻² silver (Ag) cathode catalyst on Sigracet39BC carbon paper by spray coating. As for the anode, 1 mg cm⁻² iridium (Ir) black was immobilized on a porous titanium frit. The measurements were performed feeding T = 50°C 1 M KOH anolyte continuously to the anode compartment (at a feed rate of ~9 cm³ cm⁻² min⁻¹), while the cathode compartment was purged with humidified (with T = 50°C deionized water) CO₂ at a flow rate of u = 12.5 cm³ cm⁻² min⁻¹.

Figure 4B demonstrates that an improper gas management arises due to the formation of a precipitate on the GDE, which blocks the gas path to the catalyst layer.

Furthermore, Figure 4C shows a micro-CT image of a GDE after using it in the continuous-flow electrolysis of CO₂ with an alkaline anolyte (1 M KOH). Lighter parts show the structure of the GDE (e.g. carbon fibers). The dark, black regions prove the presence of a precipitate on top of the GDE (formed in the gas-flow channels of the electrolyser) and within the pores.

That is, operating the CO₂ electrolyser with no cathode regeneration/activation results clearly in the formation of a precipitate in the GDE, i.e., both on the backside of the GDE, and also within the pores.

### Example 2: Importance of wetting properties of the GDE

The present comparative example clearly shows that the composition of the regeneration/activation liquid (or the solvent mixture, optionally containing a promoter) must be tailored to allow its access to the deeper regions of the GDE, hence to the catalyst layers.

Figure 5 shows the example of wetting a carbon-based GDL with different solvent mixtures. Water alone does not wet the carbon GDL in this example, hence it can only be forced in the structure by excessive force (e.g. pressure), which might destroy the GDL structure. However, increasing the hydrophobicity of the solvent mixture by adding isopropanol (IPA) to DI water, wetting of the GDL improves. In particular, the solvent mixture of DI water/isopropanol with a content of at least about 25 V/V/% IPA (1:3 volume ratio of IPA/DI water) wets the GDL completely. Thus, such a solvent mixture can easily be infused into the pores of the GDL, without damaging the GDL itself.

Composition of the solvent mixture capable of wetting the cathode and thus applicable in the activation process according to the invention depends on the choice of GDL; however, to determine appropriate pairs of solvent mixture/GDL and the useful composition of said solvent mixture is a routine task for a skilled artisan.

### Example 3: Effect of periodic regeneration for continuous operation

The present example proves that a CO₂ electrolyser can be operated continuously at high current density with alkaline anolyte when a periodic regeneration is applied.

To this end, Figure 6 shows the partial current density for CO and H₂ formation during the continuous operation of a CO₂ electrolyser for 8 hours at ΔU = 3.2 V. The cathode of the electrolyser was regenerated after each hour of the electrolysis. According to this example, the electrolyser performance (current density, selectivity) is sustained by the periodic regeneration.

Here, the cathode was formed by immobilizing 1 mg cm⁻² Ag cathode catalyst on Sigracet39BC carbon paper by spray coating. As for the anode, 1 mg cm⁻² Ir black was immobilized on a porous titanium frit. The measurements were performed feeding T = 60°C 0.1M caesium hydroxide (CsOH) anolyte continuously to the anode compartment (at a feed rate of ~9 cm³ cm⁻² min⁻¹), while the cathode compartment was purged with humidified (T = 60°C deionized water) CO₂ at a flow rate of u = 12.5 cm³ cm⁻² min⁻¹. In the electrolyser cell, a PiperION TP-85 membrane was used to separate the anode and the cathode.

### Example 4: Effect of electrolytes in different solvents on activating the cathode GDE

The present example proves that the solvent is crucial for the cathode activation when using dissolved promoter(s).

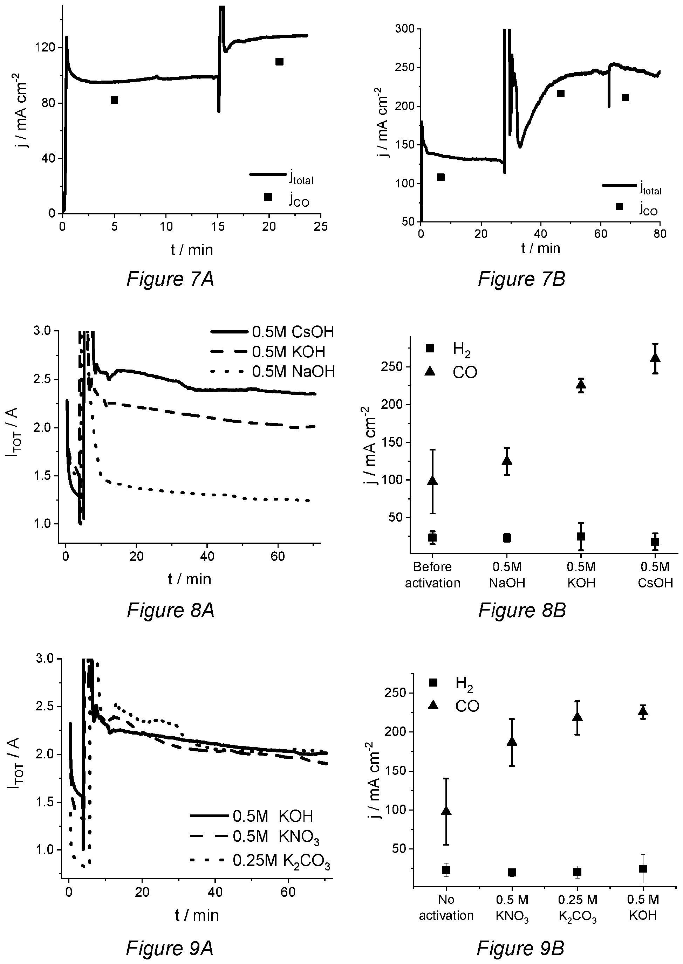

Figures 7A and 7B show two measurements when the cathode of the electrolyser is activated during continuous electrolysis at ΔU = 3.1 V, applying pure DI water anolyte. In both cases 10 cm³ 0.5 M KOH solution was injected in the gas stream, carried into the cathode compartment by the reactant CO₂ gas. For the measurement shown in Figure 7A, pure DI water was used as solvent, while the solvent was an isopropanol/DI water mixture suitable for wetting the cathode GDE for the measurements shown in Figure 7B. The effect is similar in the two cases, but a much larger degree of activation occurs using the solvent mixture which properly wets the GDE.

Here, the cathode was formed by immobilizing 3 mg cm⁻² Ag cathode catalyst on Sigracet39BC carbon paper by spray coating. As for the anode, 1 mg cm⁻² Ir black was immobilized on a porous titanium frit. The measurements were performed feeding T = 60°C pure DI water as anolyte continuously to the anode compartment (at a feed rate of ~9 cm³ cm⁻² min⁻¹), while the cathode compartment was purged with humidified (T = 60°C deionized water) CO₂ at a flow rate of u = 12.5 cm³ cm⁻² min⁻¹. In the electrolyser cell, a Sustainion X37-50 membrane was used to separate the anode and the cathode.

### Example 5: Effect of cations (as promoters) on activating the cathode GDE with different electrolytes

The present example proves that different electrolyte solutions can act as promoters. The degree of the activation depends on the used promoter. In this example the effect of different cations is demonstrated for the case of using dissolved electrolytes for cathode activation.

Figure 8A shows chronoamperometric curves with the cathode of the electrolyser activated with 10 cm³ of different alkaline solutions (c = 0.5 M) in an isopropanol/DI water mixture suitable for wetting the cathode GDE during continuous electrolysis at ΔU = 3.1 V, applying DI water as anolyte. Figure 8B illustrates the derived partial current densities for CO and H₂ production, with the cathode of a CO₂ electrolyser activated with 10 cm³ of different alkaline solutions (c = 0.5 M) in an isopropanol/DI water mixture suitable for wetting the cathode GDE during continuous electrolysis at ΔU = 3.1 V, applying DI water anolyte. The promoter solutions were injected into the gas stream, carried into the cathode compartment by the reactant CO₂ gas, i.e., simultaneously with the operation of the electrolyser, leading to a significant increase in the overall and partial current densities.

Here, the cathode was formed by immobilizing 3 mg cm⁻² Ag cathode catalyst on Sigracet39BC carbon paper by spray coating. As for the anode, 1 mg cm⁻² Ir black was immobilized on a porous titanium frit. The measurements were performed feeding T = 60°C pure DI water as anolyte continuously to the anode compartment (at a feed rate of ~9 cm³ cm⁻² min⁻¹), while the cathode compartment was purged with humidified (T = 60°C DI water) CO₂ at a flow rate of u = 12.5 cm³ cm ² min¹. In the electrolyser cell, a Sustainion X37-50 membrane was used to separate the anode and the cathode.

In this experiment only the type of cation was changed, keeping the solution volume, concentration, and the anion unchanged.

### Example 6: Effect of anions (as promoters) on activating the cathode GDE with different electrolytes

The present example proves that different electrolyte solutions can act as promoters. The degree of the activation depends on the used promoter. In this example we demonstrate the effect of different anions for the case of using dissolved electrolytes for cathode activation.

Figure 9A shows chronoamperometric curves with the cathode of a CO₂ electrolyser activated with 10 cm³ of different potassium salt solutions (c(K⁺) = 0.5 M) in an IPA/DI water mixture suitable for wetting the cathode GDE during continuous electrolysis at ΔU = 3.1 V, applying DI water anolyte. Figure 9B shows the derived partial current densities for CO and H₂ production, with the cathode of the electrolyser activated with 10 cm³ of different potassium salt solutions (c(K⁺) = 0.5 M) in an isopropanol/DI water mixture suitable for wetting the cathode GDE during continuous electrolysis at ΔU = 3.1 V, applying DI water as anolyte. The promoter solutions were injected into the gas stream, carried into the cathode compartment by the reactant CO₂ gas, leading to a significant increase in the overall and partial current densities.

Here, the cathode was formed by immobilizing 3 mg cm⁻² Ag cathode catalyst on Sigracet39BC carbon paper by spray coating. As for the anode, 1 mg cm⁻² Ir black was immobilized on a porous titanium frit. The measurements were performed feeding T = 60°C DI water as anolyte continuously to the anode compartment (at a feed rate of ~9 cm³ cm⁻² min⁻¹), while the cathode compartment was purged with humidified (T = 60°C DI water) CO₂ at a flow rate of u = 12.5 cm³ cm⁻² min⁻¹. In the electrolyser cell, a Sustainion X37-50 membrane was used to separate the anode and the cathode.

In this experiment only the type of anion (and therefore the solution pH) was changed, keeping the solution volume, the potassium cation and its concentration unchanged.

### Example 7: Effect of periodic cathode activation on long-term CO₂ electrolysis

The present example proves that the electrolyser can be operated continuously with pure DI water as anolyte when a periodic activation is performed.

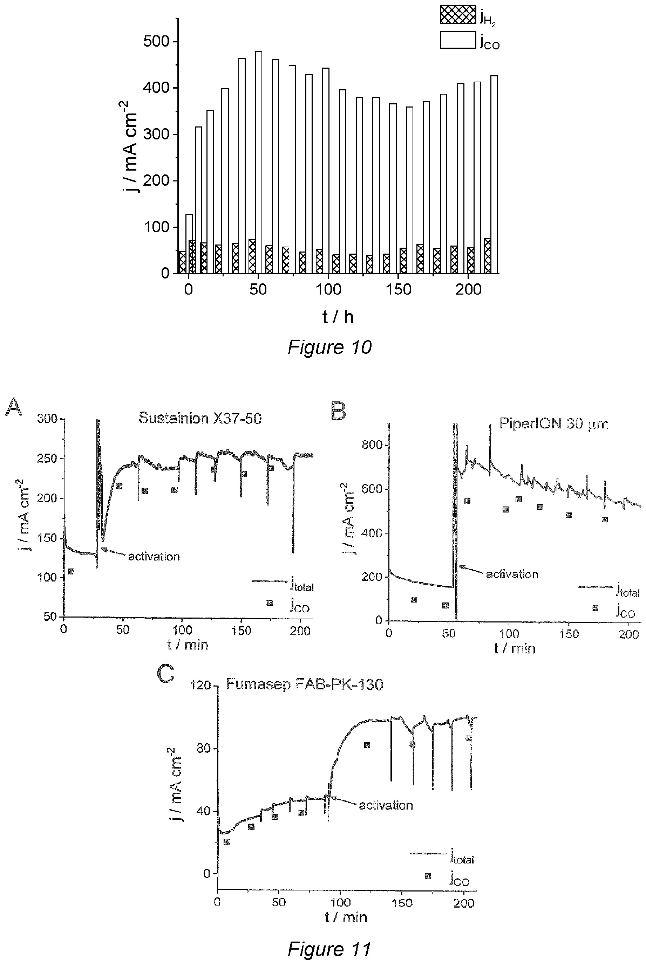

Figure 10 shows the partial current densities for CO and H₂ formation during the continuous operation of a CO₂ electrolyser for 224 hours at ΔU = 3.2 V, applying DI water anolyte. The cathode of the electrolyser was activated periodically (every 12 hours) by injecting 5 cm³ 1 M CsOH into the CO₂ gas stream, which carried it to the cathode GDE. According to this example the electrolyser performance (current density, selectivity) is sustained by the periodic activation.

Here, the cathode was formed by immobilizing 1 mg cm⁻² Ag cathode catalyst on Sigracet39BC carbon paper by spray coating. As for the anode, 1 mg cm⁻² Ir black was immobilized on a porous titanium frit. The measurements were performed feeding T = 60°C DI water as anolyte continuously to the anode compartment (at a feed rate of ~9 cm³ cm⁻² min⁻¹), while the cathode compartment was purged with humidified (T = 60°C deionized water) CO₂ at a flow rate of u = 12.5 cm³ cm⁻² min⁻¹. To separate the anode and cathode, a 15 µm thick, PTFE reinforced PiperION TP-85 membrane was used in the electrolyser cell.

### Example 8: Effect of different anion exchange membranes on activating the cathode GDE

The present example shows that the cathode GDE activation can be performed on electrolyser cells assembled with different, commercially available anion exchange membranes. This example proves that the activation effect is general and is not restricted to certain product of certain suppliers.

Figure 11 shows the total and partial current densities for CO formation during the continuous operation of a CO₂ electrolyser at ΔU = 3.1 V, applying DI water anolyte. The cathode of the electrolyser was activated by injecting 10 cm³ 1 M KOH in the CO₂ gas stream, which carried it to the cathode GDE. According to this example the electrolyser performance (current density, selectivity) is significantly increased upon performing the activation process for each type of anion exchange membranes, which is clearly marked by the immediate current increase.

Here, the cathode was formed by immobilizing 3 mg cm⁻² Ag cathode catalyst on Sigracet39BC carbon paper by spray coating. As for the anode, 1 mg cm⁻² Ir black was immobilized on a porous titanium frit. The measurements were performed feeding T = 60°C DI water as anolyte continuously into the anode compartment (at a feed rate of ~9 cm³ cm⁻² min⁻¹), while the cathode compartment was purged with humidified (T = 60°C DI water) CO₂ at a flow rate of u = 12.5 cm³ cm⁻² min⁻¹.

### Example 9: Necessary amount of activation fluids

The present example shows that the efficiency of the cathode GDE activation depends on the volume of the activation fluid. In this example, an increase in the activation efficiency was found up to 10 times the free volume of the cathode compartment using different volume of 0.5 M KOH solution (in an isopropanol/water solvent mixture suitable for wetting the cathode GDE) for the activation. Further volume increase did not lead to further efficiency increase.

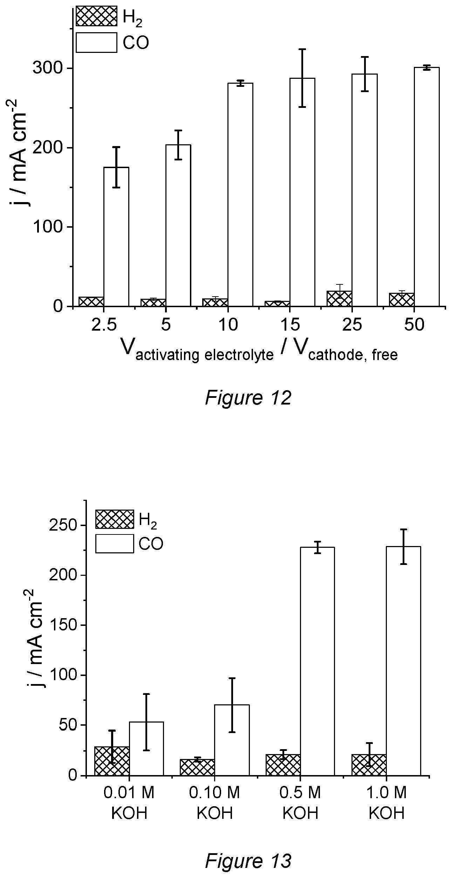

In Figure 12 the measured partial current densities for H₂ and CO formation during constant voltage electrolysis with T = 60°C DI water as anolyte at ΔU = 3.1 V is presented, after activating the cathode with different volume of 0.5 M KOH solution (in the isopropanol/DI water solvent mixture suitable for wetting the cathode GDE).

Here, the cathode was formed by immobilizing 3 mg cm⁻² Ag cathode catalyst on Sigracet39BC carbon paper by spray coating. As for the anode, 1 mg cm⁻² Ir black was immobilized on a porous titanium frit. The measurements were performed feeding T = 60°C DI water as anolyte continuously to the anode compartment (at a feed rate of ~9 cm³ cm⁻² min⁻¹), while the cathode compartment was purged with humidified (T = 60°C deionized water) CO₂ at a flow rate of u = 12.5 cm³ cm⁻² min⁻¹. In the electrolyser cell, a Sustainion X37-50 membrane was used to separate the anode and the cathode.

### Example 10: Necessary concentration of activation fluids

The present example proves, that the efficiency of the cathode GDE activation depends on the concentration of the activation fluid. In this example, an increase in the activation efficiency was found up to the concentration of 0.5 M, using 10 cm³ solution of KOH dissolved in an isopropanol/water mixture suitable for wetting the cathode GDE. Further concentration increase did not lead to further efficiency increase.

In Figure 13 the measured partial current densities for H₂ and CO formation during constant voltage electrolysis at ΔU = 3.1 V with T = 60°C DI water as anolyte is presented, after activating the cathode with 10 cm³ KOH solution of different concentration (dissolved in the isopropanol/water solvent mixture suitable for wetting the cathode GDE).

Here, the cathode was formed by immobilizing 3 mg cm⁻² Ag cathode catalyst on Sigracet39BC carbon paper by spray coating. As for the anode, 1 mg cm⁻² Ir black was immobilized on a porous titanium frit. The measurements were performed feeding T = 60°C DI water as anolyte continuously to the anode compartment (at a feed rate of ~9 cm³ cm⁻² min⁻¹), while the cathode compartment was purged with humidified (T = 60°C deionized water) CO₂ at a flow rate of u = 12.5 cm³ cm⁻² min⁻¹. In the electrolyser cell, a Sustainion X37-50 membrane was used to separate the anode and the cathode.

## Claims

1. A process to enhance electrolyser performance of an electrolyser for continuous electrolysis of gaseous carbon dioxide, CO₂, said electrolyser comprising at least an anode with an anode catalyst layer, a cathode with a cathode catalyst layer formed as a gas-diffusion electrode, GDE, an ion-conducting separator layer comprising anion exchange membrane arranged between the anode and the cathode, an anode compartment formed in contact with the anode, and a cathode compartment formed in contact with the cathode, said process comprising
- directing a flow of gaseous CO₂ through the cathode compartment, directing a flow of anolyte through the anode compartment, said anolyte being any of de-ionized water or an alkaline solution, and performing electrolysis of said CO₂ in the electrolyser, thereby converting said CO₂ into at least one product leaving said electrolyser, and
- from time to time, directing a liquid flow containing alkali metal cations through the cathode compartment on a gas side of said cathode, the liquid flow being also capable of wetting the GDE, thereby activating the GDE.

2. The process according to claim 1, wherein the liquid flow containing alkali metal cations is a liquid flow of at least one dissolved promoter, said at least one promoter being selected from a group of compounds NaCl, LiF, Li₃PO₄, Cs₂CO₃, Na₂CO₃, Li₂CO₃, K₂CO₃, Rb₂CO₃, NaNO₃, K₂SO₄, KHCO₃, NaHCO₃, LiHCO₃, CsHCO₃, RbHCO₃, RbOH, FrOH, CsOH, KOH, and NaOH.

3. The process according to claim 2, wherein the promoter concentration in said liquid flow is 0.001 to 5 mol/dm³, more preferably 0.01 to 3 mol/dm³, most preferably 0.1 to 1 mol/dm³.

4. The process according to any preceding claims, wherein the total volume of the flow directed through the cathode compartment is 0.01 to 1000 times, more preferably 0.1 to 100 times, most preferably 1 to 50 times the empty volume of said cathode compartment.

5. The process according to any preceding claims, further comprising providing said liquid flow capable of wetting the GDE as a solvent mixture of at least two different solvents.

6. The process according to claim 5, further comprising selecting any of the solvents from a group consisting of acetone, acetonitrile, chloroform, diethyl ether, diethylene glycol, dimethyl-formamide, ethyl acetate, ethylene glycol, glycerol, tetrahydrofuran, xylene, water, preferably deionized water, methanol, ethanol, 1-propanol, 2-propanol, 1-butanol, 2-butanol, pentanol, pentane, hexane, heptane, and cyclohexane.

7. The process according to any preceding claims, further comprising selecting the anolyte from a group of liquids with an alkaline concentration of 0 to 3 M.

8. The process according to any preceding claims, further comprising directing said liquid flow through the cathode compartment simultaneously with the flow of gaseous CO₂.

9. The process according to any preceding claims, further comprising constructing said electrolyser as a single electrolyser cell or an electrolyser cell-stack comprised of multiple electrolyser cells connected in series in terms of electrical connections of the electrolyser cells and connected in series/parallel in terms of the liquid flows and the gaseous flows directed through the cathode compartment of the electrolyser.

10. A process to sustain electrolyser performance of an electrolyser for continuous electrolysis of gaseous carbon dioxide, CO₂, said electrolyser comprising an anode with an anode catalyst layer, a cathode with a cathode catalyst layer formed as a gas-diffusion electrode, GDE, an ion-conducting separator layer comprising anion-conducting substance arranged between the anode and the cathode, an anode compartment formed in contact with the anode, and a cathode compartment formed in contact with the cathode, said process comprising
(a) by directing a flow of gaseous CO₂ through the cathode compartment and a flow of anolyte through the anode compartment, operating the electrolyser to perform electrolysis of said CO₂ and converting said CO₂ into a product stream leaving said electrolyser stack;
(b) monitoring at least one parameter of the gaseous CO₂ flow before entry into the electrolyser stack, thereby obtaining a first set of measurement data characteristic of the actual electrolyser performance of the electrolyser;
(c) monitoring at least one parameter of the product stream after exiting from the electrolyser, thereby obtaining a second set of measurement data characteristic of the actual electrolyser performance of the electrolyser;
(d) monitoring one of a rate of total current density decrease and cell/cell-stack voltage increase of the electrolyser while maintaining the other at a set value, thereby obtaining a further set of measurement data characteristic of the actual electrolyser performance of the electrolyser;
(e) comparing said sets of measurement data obtained in steps (b) to (d) with nominal or pre-set values of operational parameters of the electrolyser representing a desired electrolyser performance of the electrolyser, thereby obtaining at least one descriptor characteristic of an actual electrolyser performance of the electrolyser;
(f) in case one of said descriptors determined in step (e) implies that the actual electrolyser performance of the electrolyser is below a pre-defined minimum electrolyser performance, initiating the process according to any of claims 1 to 8 to increase the electrolyser performance of the electrolyser;
(g) updating said descriptors by repeating steps (b) to (e) along with continuously operating the electrolyser;
(h) in case all of said descriptors determined in step (e) imply that the actual electrolyser performance of the electrolyser has exceeded the desired electrolyser performance, finishing the process according to any of claims 1 to 8.

11. The process according to claim 10, further comprising monitoring in step (b) at least one of pressure, temperature, flow rate and moisture content of the gaseous CO₂ flow as the at least one parameter.

12. The process according to claim 10 or 11, further comprising monitoring in step (c) at least one of pressure, temperature, moisture content, pH value, flow rate, composition of the product stream as the at least one parameter.

13. The process according to any of claims 10 to 12, further comprising selecting said at least one descriptor from a group comprising pressure increase within the electrolyser, composition of the product stream, the rate of total current density decrease, and the cell/cell-stack voltage increase of the electrolyser.

14. The process according to any of claims 10 to 13, further comprising constructing the electrolyser as a single electrolyser cell or an electrolyser cell-stack comprised of multiple electrolyser cells connected in series in terms of electrical connections of the electrolyser cells and connected in series/parallel in terms of the liquid flows and the gaseous flows directed through the cathode compartment of the electrolyser.

15. The process according to any of claims 10 to 14, said process being performed automatedly.

16. A system (200, 300) to enhance and sustain electrolyser performance of an electrolyser cell (100, 100") during continuous electrolytic conversion of gaseous carbon dioxide, CO₂ to a product stream, said system (200, 300) comprising
the electrolyser cell (100, 100') comprising at least an anode with an anode catalyst layer, a cathode with a cathode catalyst layer formed as a gas-diffusion electrode, GDE, an ion-conducting separator layer comprising anion exchange membrane arranged between the anode and the cathode, an anode compartment formed in contact with the anode, and a cathode compartment formed in contact with the cathode, said electrolyser cell (100, 100') being provided as one of a single electrolyser cell and an electrolyser cell-stack comprised of multiple electrolyser cells connected in series in terms of electrical connections of the cells and connected in series/parallel in terms of substance flows directed through said cathode compartment;
a source of gaseous CO₂;
a source of liquid anolyte, said anolyte being any of de-ionized water or an alkaline solution;
a cathode-side circulation assembly to direct the gaseous CO₂ from said source of gaseous CO₂ through the cathode compartment of the cell (100, 100");
an anode-side circulation assembly to direct the liquid anolyte from said source of liquid anolyte through the anode compartment of the cell (100, 100"); and
a regeneration/activation subsystem (202) in fluid communication with said cathode-side circulation assembly to provide a liquid flow containing alkali metal cations and capable of wetting the GDE to direct, from time to time, through the cathode compartment on a gas side of said cathode, to activate the GDE by the cathode-side circulation assembly.

17. The system (200, 300) according to claim 16, wherein the regeneration/activation subsystem (202) comprises at least one promoter tank (230) for storing at least one promoter as a source of the alkali metal cations selected from a group of compounds NaCl, LiF, Li₃PO₄, Cs₂CO₃, Na₂CO₃, Li₂CO₃, K₂CO₃, Rb₂CO₃, NaNO₃, K₂SO₄, KHCO₃, NaHCO₃, LiHCO₃, CsHCO₃, RbHCO₃, RbOH, FrOH, CsOH, KOH, and NaOH dissolved in at least one solvent capable of wetting the GDE.

18. The system (200, 300) according to claim 17, wherein the regeneration/activation subsystem (202) further comprises at least one solvent tanks (240, 245) for storing the at least one solvent, said solvent being selected from a group consisting of acetone, acetonitrile, chloroform, diethyl ether, diethylene glycol, dimethyl-formamide, ethyl acetate, ethylene glycol, glycerol, tetrahydrofuran, xylene, water, preferably deionized water, methanol, ethanol, 1-propanol, 2-propanol, 1-butanol, 2-butanol, pentanol, pentane, hexane, heptane, and cyclohexane.

19. The system (300) according to any of claims 16 to 18, wherein the anode-side circulation assembly further comprises an anolyte refreshing unit (360) to refresh and circulate the anolyte through the anode compartment of the electrolyser cell (100, 100').

20. The system (200, 300) according to any of claims 16 to 19, wherein the cathode-side circulation assembly further comprises a first set (210) of sensors arranged upstream of the electrolyser cell (100, 100') to provide a first set of parameters characteristic of operation of the system (200, 300) and a second set (210") of sensors arranged downstream of the electrolyser cell (100, 100') to provide a second set of parameters characteristic of operation of the system (200, 300).

21. The system (200, 300) according to any of claims 16 to 20, wherein the cathode-side circulation assembly further comprises analyser units (209, 225) for monitoring the product stream and measuring physical/chemical parameters of said product stream that has left the electrolyser cell (100, 100').

22. The system (300) according to any of claims 16 to 21, wherein the cathode-side circulation assembly further comprises a humidifier (340) arranged upstream of the electrolyser cell (100, 100') for humidifying the gaseous CO₂ before said gaseous CO₂ enters the electrolyser cell (100, 100').

23. The system (300) according to claim 22, wherein the cathode-side circulation assembly further comprises a third set (210') of sensors arranged downstream of the humidifier (340) and upstream of the electrolyser cell (100, 100') to provide a third set of parameters characteristic of operation of the system (300).

24. The system (200, 300) according to any of claims 21 to 23, further comprising a control subsystem (201) for obtaining said first and second sets of parameters, as well as said physical/chemical parameters, and configured to operate the regeneration/activation subsystem (202) based on the obtained parameters to perform the step of providing one of the liquid flow containing alkali metal cations and the gaseous flow through the cathode compartment.

25. The system (300) according to claim 24, wherein the control subsystem (201) is also configured to obtain said third set of parameters.

26. The system (300) according to any of claims 24 to 25, wherein the control subsystem (201) is configured to automatedly perform the process according to any of claims 1 to 8 or the process according to any of claims 10 to 14.

27. The system (200, 300) according to any of claims 16 to 26, wherein the electrolyser cell (100, 100') is a zero-gap electrolyser cell (100).

## Patentansprüche

1. Prozess zur Verbesserung der Elektrolyseurleistung eines Elektrolyseurs für kontinuierliche Elektrolyse von gasförmigem Kohlendioxid, CO₂, wobei der Elektrolyseur mindestens eine Anode mit einer Anodenkatalysatorschicht, eine Kathode mit einer Kathodenkatalysatorschicht, die als Gasdiffusionselektrode, GDE, ausgebildet ist, eine zwischen der Anode und der Kathode angeordnete ionenleitende Trennschicht, die eine Anionenaustauschmembran umfasst, ein Anodenfach, das in Kontakt mit der Anode ausgebildet ist, und ein Kathodenfach, das in Kontakt mit der Kathode ausgebildet ist, umfasst, wobei der Prozess umfasst
- Leiten eines Stroms von gasförmigem CO₂ durch das Kathodenfach, Leiten eines Anolytstroms durch das Anodenfach, wobei der Anolyt entweder entionisiertes Wasser oder eine alkalische Lösung ist, und Durchführen einer Elektrolyse des CO₂ in dem Elektrolyseur, wodurch das CO₂ in mindestens ein Produkt umgewandelt wird, das den Elektrolyseur verlässt, und
- von Zeit zu Zeit, Leiten eines Flüssigkeitsstroms, der Alkalimetallkationen enthält, durch das Kathodenfach auf einer Gasseite der Kathode, wobei der Flüssigkeitsstrom auch in der Lage ist, die GDE zu benetzen, wodurch die GDE aktiviert wird.

2. Prozess nach Anspruch 1, wobei der Flüssigkeitsstrom, der Alkalimetallkationen enthält, ein Flüssigkeitsstrom aus mindestens einem gelösten Promotor ist, wobei der mindestens eine Promotor ausgewählt ist aus einer Gruppe von Verbindungen NaCl, LiF, Li₃PO₄, CS₂CO₃, Na₂CO₃, Li₂CO₃, K₂CO₃, Rb₂CO₃, NaNO₃, K₂SO₄, KHCO₃, NaHCO₃, LiHCO₃, CsHCO₃, RbHCO₃, RbOH, FrOH, CsOH, KOH und NaOH.

3. Prozess nach Anspruch 2, wobei die Promotorkonzentration in dem Flüssigkeitsstrom 0,001 bis 5 mol/dm³, bevorzugter 0,01 bis 3 mol/dm³, besonders bevorzugt 0,1 bis 1 mol/dm³ beträgt.

4. Prozess nach einem der vorstehenden Ansprüche, wobei das Gesamtvolumen des durch das Kathodenfach geleiteten Stroms das 0,01- bis 1000-fache, bevorzugter das 0,1-bis 100-fache, besonders bevorzugt das 1- bis 50-fache des Leervolumens des Kathodenfachs beträgt.

5. Prozess nach einem der vorstehenden Ansprüche, weiter umfassend das Bereitstellen des Flüssigkeitsstroms, der in der Lage ist, die GDE zu benetzen, als ein Lösungsmittelgemisch aus mindestens zwei verschiedenen Lösungsmitteln.

6. Prozess nach Anspruch 5, weiter umfassend das Auswählen eines der Lösungsmittel aus einer Gruppe bestehend aus Aceton, Acetonitril, Chloroform, Diethylether, Diethylenglykol, Dimethylformamid, Ethylacetat, Ethylenglykol, Glycerin, Tetrahydrofuran, Xylol, Wasser, vorzugsweise entionisiertes Wasser, Methanol, Ethanol, 1-Propanol, 2-Propanol, 1-Butanol, 2-Butanol, Pentanol, Pentan, Hexan, Heptan und Cyclohexan.

7. Prozess nach einem der vorstehenden Ansprüche, weiter umfassend das Auswählen des Anolyten aus einer Gruppe von Flüssigkeiten mit einer alkalischen Konzentration von 0 bis 3 M.

8. Prozess nach einem der vorstehenden Ansprüche, weiter umfassend das Leiten des Flüssigkeitsstroms durch das Kathodenfach gleichzeitig mit dem Strom von gasförmigem CO₂.

9. Prozess nach einem der vorstehenden Ansprüche, weiter umfassend das Konstruieren des Elektrolyseurs als eine einzelne Elektrolyseurzelle oder als einer Elektrolyseurzellenstapel, der aus mehreren Elektrolyseurzellen besteht, die in Bezug auf elektrische Verbindungen der Elektrolyseurzellen in Reihe geschaltet und in Bezug auf die Flüssigkeitsströme und die gasförmigen Ströme, die durch das Kathodenfach des Elektrolyseurs geleitet werden, in Reihe/parallel geschaltet sind.

10. Prozess zur Aufrechterhaltung der Elektrolyseurleistung eines Elektrolyseurs für kontinuierliche Elektrolyse von gasförmigem Kohlendioxid, CO₂, wobei der Elektrolyseur eine Anode mit einer Anodenkatalysatorschicht, eine Kathode mit einer Kathodenkatalysatorschicht, die als Gasdiffusionselektrode, GDE, ausgebildet ist, eine zwischen der Anode und der Kathode angeordnete ionenleitende Trennschicht, die eine anionenleitende Substanz umfasst, ein Anodenfach, das in Kontakt mit der Anode ausgebildet ist, und ein Kathodenfach, das in Kontakt mit der Kathode ausgebildet ist, umfasst, wobei der Prozess umfasst
a) durch Leiten eines Stroms von gasförmigem CO₂ durch das Kathodenfach und eines Anolytstroms durch das Anodenfach, Betreiben des Elektrolyseurs, um Elektrolyse des CO₂ durchzuführen, und Umwandeln des CO₂ in einen Produktstrom, der den Elektrolyseurstapel verlässt;
b) Überwachen mindestens eines Parameters des gasförmigen CO₂-Stroms vor Eintritt in den Elektrolyseurstapel, wodurch ein erster Satz von Messdaten erhalten wird, die für die tatsächliche Elektrolyseurleistung des Elektrolyseurs charakteristisch sind;
c) Überwachen mindestens eines Parameters des Produktstroms nach dem Austreten aus dem Elektrolyseur, wodurch ein zweiter Satz von Messdaten erhalten wird, die für die tatsächliche Elektrolyseurleistung des Elektrolyseurs charakteristisch sind;
d) Überwachen einer von einer Rate einer Gesamtstromdichteabnahme und Zellen-/Zellenstapelspannungserhöhung des Elektrolyseurs, während das andere auf einem eingestellten Wert gehalten wird, wodurch ein weiterer Satz von Messdaten erhalten wird, die für die tatsächliche Elektrolyseurleistung des Elektrolyseurs charakteristisch sind;
e) Vergleichen der in den Schritten (b) bis (d) erhaltenen Sätze von Messdaten mit nominalen oder voreingestellten Werten von Betriebsparametern des Elektrolyseurs, die eine gewünschte Elektrolyseurleistung des Elektrolyseurs darstellen, wodurch mindestens ein Deskriptormerkmal einer tatsächlichen Elektrolyseurleistung des Elektrolyseurs erhalten wird;
f) falls einer der in Schritt (e) bestimmten Deskriptoren impliziert, dass die tatsächliche Elektrolyseurleistung des Elektrolyseurs unter einer vordefinierten Mindestelektrolyseurleistung liegt, Einleiten des Prozesses nach einem der Ansprüche 1 bis 8, um die Elektrolyseurleistung des Elektrolyseurs zu erhöhen;
g) Aktualisieren der Deskriptoren durch Wiederholen der Schritte (b) bis (e) zusammen mit kontinuierlichem Betrieb des Elektrolyseurs;
h) falls alle der in Schritt (e) bestimmten Deskriptoren implizieren, dass die tatsächliche Elektrolyseurleistung des Elektrolyseurs die gewünschte Elektrolyseurleistung überschritten hat, Beenden des Prozesses nach einem der Ansprüche 1 bis 8.

11. Prozess nach Anspruch 10, weiter umfassend das Überwachen in Schritt (b) mindestens eines von Druck, Temperatur, Durchflussrate und Feuchtigkeitsgehalt des gasförmigen CO₂-Stroms als den mindestens einen Parameter.

12. Prozess nach Anspruch 10 oder 11, weiter umfassend das Überwachen in Schritt (c) mindestens eines von Druck, Temperatur, Feuchtigkeitsgehalt, pH-Wert, Durchflussrate, Zusammensetzung des Produktstroms als den mindestens einen Parameter.

13. Prozess nach einem der Ansprüche 10 bis 12, weiter umfassend das Auswählen des mindestens einen Deskriptors aus einer Gruppe, die Druckanstieg innerhalb des Elektrolyseurs, Zusammensetzung des Produktstroms, die Rate des Gesamtstromdichteabfalls und den Zell-/Zellstapelspannungsanstieg des Elektrolyseurs umfasst.

14. Prozess nach einem der Ansprüche 10 bis 13, weiter umfassend das Konstruieren des Elektrolyseurs als eine einzelne Elektrolyseurzelle oder ein Elektrolyseurzellenstapel, der aus mehreren Elektrolyseurzellen besteht, die in Bezug auf elektrische Verbindungen der Elektrolyseurzellen in Reihe geschaltet und in Bezug auf die Flüssigkeitsströme und die gasförmigen Ströme, die durch das Kathodenfach des Elektrolyseurs geleitet werden, in Reihe/parallel geschaltet sind.

15. Prozess nach einem der Ansprüche 10 bis 14, wobei der Prozess automatisiert durchgeführt wird.

16. System (200, 300) zur Verbesserung und Aufrechterhaltung der Elektrolyseurleistung einer Elektrolyseurzelle (100, 100") während kontinuierlicher elektrolytischer Umwandlung von gasförmigem Kohlendioxid, CO₂, in einen Produktstrom, wobei das System (200, 300) umfasst
die Elektrolyseurzelle (100, 100'), umfassend mindestens eine Anode mit einer Anodenkatalysatorschicht, eine Kathode mit einer Kathodenkatalysatorschicht, die als eine Gasdiffusionselektrode, GDE, ausgebildet ist, eine ionenleitende Trennschicht, die eine zwischen der Anode und der Kathode angeordnete Anionenaustauschermembran umfasst, ein Anodenfach, das in Kontakt mit der Anode ausgebildet ist, und ein Kathodenfach, das in Kontakt mit der Kathode ausgebildet ist, umfasst, wobei die Elektrolyseurzelle (100, 100') entweder als eine einzelne Elektrolyseurzelle oder als ein Elektrolyseurzellenstapel bereitgestellt ist, der aus mehreren Elektrolyseurzellen besteht, die in Bezug auf elektrische Verbindungen der Zellen in Reihe geschaltet sind und in Bezug auf Substanzströme, die durch das Kathodenfach geleitet werden, in Reihe/parallel geschaltet sind;
eine Quelle für gasförmiges CO₂;
eine Quelle für flüssigen Anolyten, wobei der Anolyt entweder entionisiertes Wasser oder eine alkalische Lösung ist;
eine kathodenseitige Zirkulationsanordnung, um das gasförmige CO₂ von der Quelle für gasförmiges CO₂ durch das Kathodenfach der Zelle (100, 100") zu leiten;
eine anodenseitige Zirkulationsanordnung, um den flüssigen Anolyten von der Quelle für flüssigen Anolyten durch das Anodenfach der Zelle (100, 100") zu leiten; und
ein Regenerations-/Aktivierungsteilsystem (202) in strömungstechnischer Kommunikation mit der kathodenseitigen Zirkulationsanordnung, um einen Flüssigkeitsstrom bereitzustellen, der Alkalimetallkationen enthält und in der Lage ist, die GDE zu benetzen, um ihn von Zeit zu Zeit durch das Kathodenfach auf einer Gasseite der Kathode zu leiten, um die GDE durch die kathodenseitige Zirkulationsanordnung zu aktivieren.

17. System (200, 300) nach Anspruch 16, wobei das Regenerations-/Aktivierungsteilsystem (202) mindestens einen Promotortank (230) zum Lagern mindestens eines Promotors als eine Quelle für die Alkalimetallkationen umfasst, die ausgewählt sind aus einer Gruppe von Verbindungen NaCl, LiF, Li₃PO₄, CS₂CO₃, Na₂CO₃, Li₂CO₃, K₂CO₃, Rb₂CO₃, NaNO₃, K₂SO₄, KHCO₃, NaHCO₃, LiHCO₃, CsHCO₃, RbHCO₃, RbOH, FrOH, CsOH, KOH und NaOH, gelöst in mindestens einem Lösungsmittel, das in der Lage ist, die GDE zu benetzen.

18. System (200, 300) nach Anspruch 17, wobei das Regenerations-/Aktivierungsteilsystem (202) weiter mindestens einen Lösungsmitteltank (240, 245) zum Lagern des mindestens einen Lösungsmittels umfasst, wobei das Lösungsmittel ausgewählt ist aus einer Gruppe bestehend aus Aceton, Acetonitril, Chloroform, Diethylether, Diethylenglykol, Dimethylformamid, Ethylacetat, Ethylenglykol, Glycerin, Tetrahydrofuran, Xylol, Wasser, vorzugsweise entionisiertem Wasser, Methanol, Ethanol, 1-Propanol, 2-Propanol, 1-Butanol, 2-Butanol, Pentanol, Pentan, Hexan, Heptan und Cyclohexan.

19. System (300) nach einem der Ansprüche 16 bis 18, wobei die anodenseitige Zirkulationsanordnung weiter eine Anolytauffrischungseinheit (360) zum Auffrischen und Zirkulieren des Anolyten durch das Anodenfach der Elektrolyseurzelle (100, 100') umfasst.

20. System (200, 300) nach einem der Ansprüche 16 bis 19, wobei die kathodenseitige Zirkulationsanordnung weiter einen ersten Satz (210) von Sensoren umfasst, die stromaufwärts der Elektrolyseurzelle (100, 100') angeordnet sind, um einen ersten Satz von Parametern bereitzustellen, die für den Betrieb des Systems (200, 300) charakteristisch sind, und einen zweiten Satz (210") von Sensoren, die stromabwärts der Elektrolyseurzelle (100, 100') angeordnet sind, um einen zweiten Satz von Parametern bereitzustellen, die für den Betrieb des Systems (200, 300) charakteristisch sind.

21. System (200, 300) nach einem der Ansprüche 16 bis 20, wobei die kathodenseitige Zirkulationsanordnung weiter Analyseeinheiten (209, 225) zur Überwachung des Produktstroms und Messung physikalischer/chemischer Parameter des Produktstroms umfasst, der die Elektrolyseurzelle (100, 100') verlassen hat.

22. System (300) nach einem der Ansprüche 16 bis 21, wobei die kathodenseitige Zirkulationsanordnung weiter einen Befeuchter (340) umfasst, der stromaufwärts der Elektrolyseurzelle (100,100') angeordnet ist, um das gasförmige CO₂ zu befeuchten, bevor das gasförmige CO₂ in die Elektrolyseurzelle (100, 100') eintritt.

23. System (300) nach Anspruch 22, wobei die kathodenseitige Zirkulationsanordnung weiter einen dritten Satz (210') von Sensoren umfasst, die stromabwärts des Befeuchters (340) und stromaufwärts der Elektrolyseurzelle (100, 100') angeordnet sind, um einen dritten Satz von Parametern bereitzustellen, die für den Betrieb des Systems (300) charakteristisch sind.

24. System (200, 300) nach einem der Ansprüche 21 bis 23, weiter umfassend ein Steuerteilsystem (201) zum Erhalten des ersten und zweiten Satzes von Parametern sowie der physikalischen/chemischen Parameter, und dazu konfiguriert, das Regenerations-/Aktivierungsteilsystem (202) auf Grundlage der erhaltenen Parameter zu betreiben, um den Schritt des Bereitstellens entweder des Flüssigkeitsstroms, der Alkalimetallkationen enthält, oder des gasförmigen Stroms durch das Kathodenfach durchzuführen.

25. System (300) nach Anspruch 24, wobei das Steuerteilsystem (201) auch dazu konfiguriert ist, den dritten Satz von Parametern zu erhalten.

26. System (300) nach einem der Ansprüche 24 bis 25, wobei das Steuerteilsystem (201) dazu konfiguriert ist, der Prozess nach einem der Ansprüche 1 bis 8 oder der Prozess nach einem der Ansprüche 10 bis 14 automatisiert durchzuführen.

27. System (200, 300) nach einem der Ansprüche 16 bis 26, wobei die Elektrolyseurzelle (100, 100') eine Null-Spalt-Elektrolyseurzelle (100) ist.

## Revendications

1. Processus pour améliorer la performance d'électrolyseur d'un électrolyseur pour une électrolyse continue de dioxyde de carbone gazeux, CO₂, ledit électrolyseur comprenant au moins une anode avec une couche de catalyseur anodique, une cathode avec une couche de catalyseur cathodique formée en tant qu'électrode de diffusion de gaz, GDE, une couche de séparation conductrice d'ions comprenant une membrane échangeuse d'anions agencée entre l'anode et la cathode, un compartiment anodique formé en contact avec l'anode, et un compartiment cathodique formé en contact avec la cathode, ledit processus comprenant
- l'orientation d'un flux de CO₂ gazeux à travers le compartiment cathodique, l'orientation d'un flux d'anolyte à travers le compartiment anodique, ledit anolyte étant de l'eau désionisée ou une solution alcaline, et la réalisation d'une électrolyse dudit CO₂ dans l'électrolyseur, convertissant ainsi ledit CO₂ en au moins un produit sortant dudit électrolyseur, et
- de temps en temps, l'orientation d'un flux de liquide contenant des cations de métal alcalin à travers le compartiment cathodique sur un côté gaz de ladite cathode, le flux de liquide étant également capable de mouiller la GDE, activant ainsi la GDE.

2. Processus selon la revendication 1, dans lequel le flux de liquide contenant des cations de métal alcalin est un flux de liquide d'au moins un promoteur dissous, ledit au moins un promoteur étant choisi dans un groupe de composés NaCl, LiF, Li₃PO₄, Cs₂CO₃, Na₂CO₃, Li₂CO₃, K₂CO₃, Rb₂CO₃, NaNO₃, K₂SO₄, KHCO₃, NaHCO₃, LiHCO₃, CsHCO₃, RbHCO₃, RbOH, FrOH, CsOH, KOH et NaOH.

3. Processus selon la revendication 2, dans lequel la concentration en promoteur dans ledit flux de liquide est de 0,001 à 5 mol/dm³, plus préférentiellement de 0,01 à 3 mol/dm³, le plus préférentiellement de 0,1 à 1 mol/dm³.

4. Processus selon l'une quelconque des revendications précédentes, dans lequel le volume total du flux orienté à travers le compartiment cathodique est de 0,01 à 1000 fois, plus préférentiellement de 0,1 à 100 fois, le plus préférentiellement de 1 à 50 fois le volume vide dudit compartiment cathodique.

5. Processus selon l'une quelconque des revendications précédentes, comprenant en outre la fourniture dudit flux de liquide capable de mouiller la GDE sous la forme d'un mélange de solvants d'au moins deux solvants différents.

6. Processus selon la revendication 5, comprenant en outre la sélection de l'un quelconque des solvants dans un groupe consistant en l'acétone, l'acétonitrile, le chloroforme, l'éther diéthylique, le diéthylèneglycol, le diméthylformamide, l'acétate d'éthyle, l'éthylèneglycol, le glycérol, le tétrahydrofuranne, le xylène, l'eau, de préférence l'eau désionisée, le méthanol, l'éthanol, le 1-propanol, le 2-propanol, le 1-butanol, le 2-butanol, le pentanol, le pentane, l'hexane, l'heptane et le cyclohexane.

7. Processus selon l'une quelconque des revendications précédentes, comprenant en outre la sélection de l'anolyte dans un groupe de liquides présentant une concentration alcaline de 0 à 3 M.

8. Processus selon l'une quelconque des revendications précédentes, comprenant en outre l'orientation dudit flux de liquide à travers le compartiment cathodique simultanément avec le flux de CO₂ gazeux.

9. Processus selon l'une quelconque des revendications précédentes, comprenant en outre la construction dudit électrolyseur sous la forme d'une cellule d'électrolyse unique ou d'un empilement de cellules d'électrolyse composé de multiples cellules d'électrolyse connectées en série en termes de connexions électriques des cellules d'électrolyse et connectées en série/parallèle en termes de flux de liquide et de flux de gaz orientés à travers le compartiment cathodique de l'électrolyseur.

10. Processus pour maintenir la performance d'électrolyseur d'un électrolyseur pour une électrolyse continue de dioxyde de carbone gazeux, CO₂, ledit électrolyseur comprenant une anode avec une couche de catalyseur anodique, une cathode avec une couche de catalyseur cathodique formée en tant qu'électrode de diffusion de gaz, GDE, une couche de séparation conductrice d'ions comprenant une substance conductrice d'anions agencée entre l'anode et la cathode, un compartiment anodique formé en contact avec l'anode, et un compartiment cathodique formé en contact avec la cathode, ledit processus comprenant
a) l'orientation d'un flux de CO₂ gazeux à travers le compartiment cathodique et d'un flux d'anolyte à travers le compartiment anodique, l'activation de l'électrolyseur pour effectuer une électrolyse dudit CO₂ et la conversion dudit CO₂ en un flux de produit sortant dudit empilement d'électrolyseurs ;
b) la surveillance d'au moins un paramètre du flux de CO₂ gazeux avant son entrée dans l'empilement d'électrolyseurs, obtenant ainsi un premier ensemble de données de mesure caractéristiques de la performance d'électrolyseur réelle de l'électrolyseur ;
c) la surveillance d'au moins un paramètre du flux de produit après la sortie de l'électrolyseur, obtenant ainsi un second ensemble de données de mesure caractéristiques de la performance d'électrolyseur réelle de l'électrolyseur ;
d) la surveillance de l'une d'une vitesse de diminution de densité de courant totale et d'une augmentation de tension de cellule/empilement de cellules de l'électrolyseur tout en maintenant l'autre à une valeur définie, obtenant ainsi un ensemble supplémentaire de données de mesure caractéristiques de la performance d'électrolyseur réelle de l'électrolyseur ;
e) la comparaison desdits ensembles de données de mesure obtenus aux étapes (b) à (d) avec des valeurs nominales ou prédéfinies de paramètres de fonctionnement de l'électrolyseur représentant une performance d'électrolyseur souhaitée de l'électrolyseur, obtenant ainsi au moins une caractéristique descriptive d'une performance d'électrolyseur réelle de l'électrolyseur ;
f) dans un cas où l'un desdits descripteurs déterminés à l'étape (e) implique que la performance d'électrolyseur réelle de l'électrolyseur est inférieure à une performance d'électrolyseur minimale prédéfinie, le lancement du processus selon l'une quelconque des revendications 1 à 8 pour augmenter la performance d'électrolyseur de l'électrolyseur ;
g) la mise à jour desdits descripteurs en répétant les étapes (b) à (e) pendant le fonctionnement continu de l'électrolyseur ;
h) dans un cas où tous les descripteurs déterminés à l'étape (e) impliquent que la performance d'électrolyseur réelles de l'électrolyseur a dépassé la performance d'électrolyseur souhaitée, l'achèvement du processus selon l'une quelconque des revendications 1 à 8.

11. Processus selon la revendication 10, comprenant en outre la surveillance à l'étape (b) d'au moins un parmi la pression, la température, le débit et la teneur en humidité du flux de CO₂ gazeux en tant que le au moins un paramètre.

12. Processus selon la revendication 10 ou 11, comprenant en outre la surveillance à l'étape (c) d'au moins un parmi la pression, la température, la teneur en humidité, la valeur du pH, le débit et la composition du flux de produit en tant que le au moins un paramètre.

13. Processus selon l'une quelconque des revendications 10 à 12, comprenant en outre la sélection dudit au moins un descripteur dans un groupe comprenant une augmentation de pression à l'intérieur de l'électrolyseur, la composition du flux de produit, la vitesse de diminution de la densité de courant totale, et l'augmentation de tension de cellule/d'empilement de cellules de l'électrolyseur.

14. Processus selon l'une quelconque des revendications 10 à 13, comprenant en outre la construction de l'électrolyseur sous la forme d'une cellule d'électrolyse unique ou d'un empilement de cellules d'électrolyse composé de multiples cellules d'électrolyse connectées en série en termes de connexions électriques des cellules d'électrolyse et connectées en série/parallèle en termes de flux de liquide et de flux de gaz orientés à travers le compartiment cathodique de l'électrolyseur.

15. Processus selon l'une quelconque des revendications 10 à 14, ledit processus étant exécuté de manière automatisée.

16. Système (200, 300) pour améliorer et maintenir la performance d'électrolyseur d'une cellule d'électrolyse (100, 100") pendant une conversion électrolytique continue de dioxyde de carbone gazeux, CO₂ en un flux de produit, ledit système (200, 300) comprenant
la cellule d'électrolyse (100, 100') comprenant au moins une anode avec une couche de catalyseur anodique, une cathode avec une couche de catalyseur cathodique formée en tant qu'électrode de diffusion de gaz, GDE, une couche de séparation conductrice d'ions comprenant une membrane échangeuse d'anions agencée entre l'anode et la cathode, un compartiment anodique formé en contact avec l'anode, et un compartiment cathodique formé en contact avec la cathode, ladite cellule d'électrolyse (100, 100') étant présente sous une forme parmi une cellule d'électrolyse unique et un empilement de cellules d'électrolyse composé de plusieurs cellules d'électrolyse connectées en série en termes de connexions électriques des cellules et connectées en série/parallèle en termes de flux de substance orientés à travers ledit compartiment cathodique ;
une source de CO₂ gazeux ;
une source d'anolyte liquide, ledit anolyte étant de l'eau désionisée ou une solution alcaline ;
un ensemble de circulation côté cathode pour orienter le CO₂ gazeux provenant de ladite source de CO₂ gazeux à travers le compartiment cathodique de la cellule (100, 100") ;
un ensemble de circulation côté anode pour orienter l'anolyte liquide depuis ladite source d'anolyte liquide à travers le compartiment anodique de la cellule (100, 100") ; et
un sous-système de régénération/activation (202) en communication fluidique avec ledit ensemble de circulation côté cathode pour fournir un flux de liquide contenant des cations de métal alcalin et capable de mouiller la GDE pour l'orienter, de temps en temps, à travers le compartiment cathodique sur un côté gaz de ladite cathode, pour activer le GDE par l'ensemble de circulation côté cathode.

17. Système (200, 300) selon la revendication 16, dans lequel le sous-système de régénération/activation (202) comprend au moins un réservoir de promoteur (230) pour stocker au moins un promoteur en tant que source de cations de métal alcalin choisis parmi un groupe de composés NaCl, LiF, Li₃PO₄, Cs₂CO₃, Na₂CO₃, Li₂CO₃, K₂CO₃, Rb₂CO₃, NaNO₃, K₂SO₄, KHCO₃, NaHCO₃, LiHCO₃, CsHCO₃, RbHCO₃, RbOH, FrOH, CsOH, KOH et NaOH dissous dans au moins un solvant capable de mouiller la GDE.

18. Système (200, 300) selon la revendication 17, dans lequel le sous-système de régénération/activation (202) comprend en outre au moins un réservoir de solvant (240, 245) pour stocker le au moins un solvant, ledit solvant étant choisi dans un groupe consistant en l'acétone, l'acétonitrile, le chloroforme, l'éther diéthylique, le diéthylèneglycol, le diméthylformamide, l'acétate d'éthyle, l'éthylèneglycol, le glycérol, le tétrahydrofuranne, le xylène, l'eau, de préférence l'eau désionisée, le méthanol, l'éthanol, le 1-propanol, le 2-propanol, le 1-butanol, le 2-butanol, le pentanol, le pentane, l'hexane, l'heptane et le cyclohexane.

19. Système (300) selon l'une quelconque des revendications 16 à 18, dans lequel l'ensemble de circulation côté anode comprend en outre une unité de rafraîchissement d'anolyte (360) pour rafraîchir et faire circuler l'anolyte à travers le compartiment anodique de la cellule d'électrolyse (100, 100').

20. Système (200, 300) selon l'une quelconque des revendications 16 à 19, dans lequel l'ensemble de circulation côté cathode comprend en outre un premier ensemble (210) de capteurs agencés en amont de la cellule d'électrolyse (100, 100') pour fournir un premier ensemble de paramètres caractéristiques du fonctionnement du système (200, 300) et un deuxième ensemble (210") de capteurs agencés en aval de la cellule d'électrolyse (100, 100') pour fournir un deuxième ensemble de paramètres caractéristiques du fonctionnement du système (200, 300).

21. Système (200, 300) selon l'une quelconque des revendications 16 à 20, dans lequel l'ensemble de circulation côté cathode comprend en outre des unités d'analyse (209, 225) pour surveiller le flux de produit et mesurer des paramètres physiques/chimiques dudit flux de produit ayant quitté la cellule d'électrolyse (100, 100').

22. Système (300) selon l'une quelconque des revendications 16 à 21, dans lequel l'ensemble de circulation côté cathode comprend en outre un humidificateur (340) agencé en amont de la cellule d'électrolyse (100, 100') pour humidifier le CO₂ gazeux avant que ledit CO₂ gazeux n'entre dans la cellule d'électrolyse (100, 100').

23. Système (300) selon la revendication 22, dans lequel l'ensemble de circulation côté cathode comprend en outre un troisième ensemble (210') de capteurs agencés en aval de l'humidificateur (340) et en amont de la cellule d'électrolyse (100, 100') pour fournir un troisième ensemble de paramètres caractéristiques du fonctionnement du système (300).

24. Système (200, 300) selon l'une quelconque des revendications 21 à 23, comprenant en outre un sous-système de commande (201) pour obtenir lesdits premier et deuxième ensembles de paramètres, ainsi que lesdits paramètres physiques/chimiques et configuré pour activer le sous-système de régénération/activation (202) sur la base des paramètres obtenus pour effectuer l'étape de fourniture de l'un du flux de liquide contenant des cations de métal alcalin et du flux de gaz à travers le compartiment cathodique.

25. Système (300) selon la revendication 24, dans lequel le sous-système de commande (201) est également configuré pour obtenir ledit troisième ensemble de paramètres.

26. Système (300) selon l'une quelconque des revendications 24 à 25, dans lequel le sous-système de commande (201) est configuré pour exécuter automatiquement le processus selon l'une quelconque des revendications 1 à 8 ou le processus selon l'une quelconque des revendications 10 à 14.

27. Système (200, 300) selon l'une quelconque des revendications 16 à 26, dans lequel la cellule d'électrolyse (100, 100') est une cellule d'électrolyse à écartement nul (100).
